(19) Europäisches Patentamt
European Patent Office
Office européen des brevets

(11) **EP 2 893 387 B1**

(12) **EUROPÄISCHE PATENTSCHRIFT**

(45) Veröffentlichungstag und Bekanntmachung des Hinweises auf die Patenterteilung:
**03.02.2016  Patentblatt 2016/05**

(21) Anmeldenummer: **14749819.0**

(22) Anmeldetag: **08.08.2014**

(51) Int Cl.:
**G02B 26/10** (2006.01)

(86) Internationale Anmeldenummer:
**PCT/EP2014/067059**

(87) Internationale Veröffentlichungsnummer:
**WO 2015/018924 (12.02.2015 Gazette 2015/06)**

(54) **OPTISCHER RESONANZSCANNER**

OPTICAL RESONANCE SCANNER

SCANNER OPTIQUE À RÉSONANCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.08.2013   DE 202013103566 U**

(43) Veröffentlichungstag der Anmeldung:
**15.07.2015   Patentblatt 2015/29**

(73) Patentinhaber: **Femotech GmbH**
**35756 Mittenaar-Offenbach (DE)**

(72) Erfinder:
• **ROSE, Andreas**
  **35745 Herborn (DE)**
• **HERR, Günter**
  **35630 Ehringshausen (DE)**
• **WEIL, Michael**
  **35756 Mittenaar (DE)**

(74) Vertreter: **Müller, Eckhard**
**Mühlstrasse 9a**
**65597 Hünfelden-Dauborn (DE)**

(56) Entgegenhaltungen:
**WO-A1-2006/004644     US-A- 4 502 752**
**US-A- 4 874 215     US-A1- 2005 036 187**
**US-A1- 2013 020 981**

**Beschreibung**

Die Erfindung betrifft eine optische Scan-Vorrichtung, insbesondere einen optischen Resonanzscanner, insbesondere einen Torsionsresonanzschwinger, mit einem federelastischen Biegeelement, welches über wenigstens einen stationären Magneten und über wenigstens eine stationäre Antriebsspule zu Schwingungen, insbesondere zu Drehschwingungen, insbesondere sinusförmige Drehschwingungen, um eine Längsachse, anregbar ist, insbesondere bis zu einem definierten Kippwinkel, wobei die Antriebsspule um einen Polschuh gewickelt ist, welcher magnetisch mit dem Magneten gekoppelt ist und zwei sich gegenüberliegende freie Enden aufweist, zwischen denen das Biegeelement symmetrisch derart angeordnet ist, dass zwischen dem Biegeelement und den freien Enden des Polschuhs ein magnetischer Fluss im Wesentlichen senkrecht zur Längsachse übertragbar ist.

Derartige optische Scan-Vorrichtungen finden zahlreiche verschiedene Applikationsmöglichkeiten, beispielsweise in Materialbearbeitungssystemen, Projektionssystemen, Druckmaschinen, optischen Zielerfassungen und Entfernungsmessern, zur Ausleuchtung, Rasterbilderfassung, Datenerfassung oder in Barcode-Lesegeräten, sowie in anderen industriellen, medizinischen, militärischen oder Konsumer-Anwendungen.

Zumeist weisen übliche optische Resonanzscanner mit magnetischem Antrieb entweder bewegliche Magneten oder bewegliche Schwingspulen als Komponenten eines elektromagnetischen Antriebs zur Erzeugung und Aufrechterhaltung eines oszillierenden Biegeelements auf. Nachteilig gestaltet sich dabei, dass das Biegeelement ein hohes Trägheitsmoment aufweist, da zumindest ein Teil der elektromagnetischen Antriebsteile mit dem Biegeelement mechanisch verbunden ist. Infolgedessen können derartige Scanner in der Regel nicht mit Frequenzen über 16 kHz betrieben werden, insbesondere wenn große Spiegeldurchmesser, große Scan-Winkel und/oder Spiegel von hoher Materialdicke eingesetzt werden.

Demgegenüber betrifft die vorliegende Erfindung solche optische Scanner, bei denen zur Erzeugung und Aufrechterhaltung der Schwingbewegung weder bewegte Magneten noch bewegte Spulen, sondern ausschließlich stationäre Spulen und Magnete zum Einsatz kommen.

Eine optische Scan-Vorrichtung der eingangs genannten Art mit stationären Spulen und stationären Magneten ist beispielsweise aus US 5 557 444 A bzw. DE 695 29 530 T2 bekannt. Darin wird ein optischer Resonanzscanner beschrieben, der zum oszillierenden Antreiben eines Spiegels zwei Permanentmagnete aufweist, die im direktem Kontakt mit einem federelastischen Biegeelement stehen, welches aus einem ferromagnetischen Material besteht und auf welches der in Drehschwingung zu versetzende Spiegel montiert ist. Der permanentmagnetisch erregte Fluss der beiden Magnete wird dabei entlang der Längsrichtung des Biegeelements (durch den Torsionsstab) dem Anker und den Arbeitsluftspalten zugeführt. Wegen der großen Flächenunterschiede zwischen Torsionsquerschnitt und Arbeitsluftspaltfläche sind nur geringe magnetische Vorspannungen erreichbar.

Die in der Fach- und Patentliteratur beschriebenen und auch ausgeführten Systeme nach vorbeschriebener Funktionsweise, so z.B. die US 5 557 444 A bzw. DE 695 29 530 T2 oder die US 2006/0017333 A1, weisen verschiedene Nachteile auf. Durch die Bewegung des dort beschriebenen Ankers entstehen auf Grund der Reluktanzunterschiede der beiden Arbeitsluftspalte horizontale Querkräfte und zusätzlich Schwankungen in der vertikal angreifenden Anzugskraft zwischen Anker und Magnet. Die Querkräfte ändern sich periodisch mit der Schwingfrequenz und haben das Maximum bei voller Auslenkung. Die Vertikalkräfte schwanken periodisch mit doppelter Schwingfrequenz zwischen dem Anzugskraftwert $F_{h0}$ (unbestromt und nicht ausgelenkt) und dem größeren Wert in den Endstellungen. Dadurch werden horizontale und vertikale Schwingungen angeregt, die zu einem Taumeln des Ankers und somit des Spiegels führen, was wiederum zu Abbildungsfehlern führt. Außerdem wird der Arbeitspunkt des Magneten periodisch mit doppelter Schwingfrequenz verschoben. Auf Grund des relativ hohen spezifischen Ohm'schen Widerstandes des Permanentmagnetmaterials existiert kaum eine dämpfende Wirkung durch Wirbelströme.

Desweiteren treten bei den aus dem Stand der Technik bekannten Scannern, unabhängig ob mit oder ohne bewegte elektromagnetische Antriebsteile, Probleme im Hinblick auf die Schwingungsamplitude auf. So unterliegt die Auslenkung des Biegematerials bei nicht konstanten Temperaturverhältnissen in der Umgebung einer thermischen Abhängigkeit, so dass eine konstante Auslenkung bzw. eine konstante Schwingungsamplitude über einen weiten Temperaturbereich nicht gewährleistet ist. Gleiches gilt für sich ändernde Ströme der Treiberelektronik, die ebenfalls zu einer nicht konstanten Auslenkung bzw. Schwingungsamplitude führen.

Aufgabe der vorliegenden Erfindung ist es daher, eine optische Scan-Vorrichtung der eingangs genannten Art dahingehend weiterzuentwickeln, dass die Effizienz des Antriebs ohne überschüssige Wärmeerzeugung verbessert wird und gleichzeitig ein Betrieb mit Spiegeln großen Durchmessers und großer Dicke bei Frequenzen auch oberhalb von 16 kHz über große Scan-Winkel möglich ist. Vorzugsweise soll außerdem ein Betrieb mit konstanten Schwingungsamplituden ermöglicht werden.

Die Aufgabe wird gelöst durch eine optische Scan-Vorrichtung gemäß Anspruch 1. Vorteilhafte Ausgestaltungen der Erfindung sind Gegenstand der Unteransprüche.

Gemäß der Erfindung zeichnet sich die Scan-Vorrichtung dadurch aus, dass der Magnet symmetrisch bezüglich der freien Enden des Polschuhs derart angeordnet ist, dass der vom Magneten erzeugte magnetische Fluss im Wesentlichen senkrecht zur Längsachse mit dem Biegeelement koppelt und sich in Überlagerung der magnet- und spuleninduzierten magnetischen Flüsse durch den Magneten und eine erste Hälfte des Polschuhs ein erster magnetischer Kreis und durch den Magneten und eine zweite Hälfte des Polschuhs ein zweiter magnetischer Kreis ausbilden, die zueinander gegensinnig in einer Ebene senkrecht zur Längsachse durch einen magnetisierbaren Abschnitt des Biegeelements verlaufen.

Eine entsprechende Anordnung der Scan-Vorrichtung wird auch als Torsionsresonanzschwinger bezeichnet.

In erfindungsgemäßer Weise wurde erkannt, dass sich bei der aus US 5 557 444 A bzw. DE 695 29 530 T2 bekannten Scan-Vorrichtungen aus der speziellen Anordnung der elektromagnetischen Antriebsteile, insbesondere aus der Anordnung der beiden Permanentmagnete an den Enden des Biegeelementes, sehr lange magnetische Flusspfade ergeben, die mitunter beträchtliche Wirbelströme verursachen und wegen der damit einhergehenden Erwärmung des ferromagnetischen Materials zudem Verluste im Hinblick auf die Effizienz des Treibers bewirken.

Durch die erfindungsgemäße Anordnung des Polschuhs und des Magneten relativ zum Biegeelement, insbesondere durch die koplanare Anordnung des ersten und zweiten Magnetkreises, sind die magnetischen Flusspfade und damit das Auftreten von Wirbelströmen deutlich minimiert.

Erfindungsgemäß weisen der erste und der zweite Magnetkreis einen gemeinsamen magnetischen Pfad durch den Magneten und teilweise durch das Biegeelement, d.h. durch den magnetisierbaren Abschnitt des Biegeelements, auf. In Letzterem teilen sich die beiden Kreise auf, verlaufen im Gegensinn über getrennte Pfade durch die erste bzw. zweite Hälfte des Polschuhs und werden sodann im Magneten wieder vereint. Dabei hängt der Verlauf der magnetischen Flüsse von der Polarität der Felder ab, die von der wenigstens einen Antriebsspule und dem Magneten erzeugt werden.

Erfindungsgemäß werden Taumelbewegungen durch eine massive Kurzschlusshülse oder Kurzschlusswindung entgegengewirkt. Eine solche Kurzschlusswindung kann aus Kupfer bestehen, die den Permanentmagneten umschließt. Die Schwankungen des magnetischen Flusses im Magneten werden unterbunden (gedämpft) und somit auch die periodischen mit $2f_0$ Schwankungen der Vertikalkräfte.

Nach einer ersten vorteilhaften Ausgestaltung der Erfindung ist jedoch zusätzlich zur ersten Antriebsspule eine zweite Antriebsspule vorgesehen, wobei die erste Antriebsspule um die erste Hälfte des Polschuhs und die zweite Antriebsspule um die zweite Hälfte des Polschuhs gewickelt ist. Die beiden Antriebsspulen können in manchen Ausführungsformen als Teilspulen einer gemeinsamen Spule betrachtet werden.

Die sich allein aufgrund des magnetischen Flusses des Magneten ergebenden Magnetkreise sind aufgrund der symmetrischen Anordnung des Magneten relativ zu den beiden Hälften des Polschuhs und dem Biegeelement symmetrisch ausgebildet, werden jedoch unsymmetrisch, wenn an die erste und/oder die zweite Antriebsspule ein elektrisches Wechselstrom-Treibersignal, z.B. ein Sinussignal oder Rechtecksignal, anlegt wird. Hierdurch werden zusätzliche, spuleninduzierte magnetische Flüsse in einem oder beiden Magnetkreisen generiert, die den magnetischen Gesamtfluss periodisch wechselnd in dem einen Kreis verstärken und in dem anderen Kreis reduzieren. Die sich daraus ergebende Asymmetrie der magnetischen Kräfte zwischen dem durchflossenen magnetisierbaren Abschnitt des Biegeelements und den freien Enden des Polschuhs bewirkt auf das Biegeelement ein sich periodisch änderndes Drehmoment, infolge dessen das Biegeelement zu Schwingungen, insbesondere zu Drehschwingungen um seine Längsachse, angeregt wird. Dabei ist die Schwingungsfrequenz des Biegeelements direkt proportional zur Frequenz des Treibersignals.

Zur Erzeugung der Asymmetrie mit zwei Spulen sind die erste und die zweite Antriebsspule entweder in entgegengesetzter Richtung gewickelt oder werden von phasenverschobenen, insbesondere gegenphasigen, Treibersignalen, angesteuert. Nach einer bevorzugten Ausführungsform der Erfindung sind die erste und die zweite Antriebsspule in entgegengesetzter Richtung und mit gleicher Wicklungszahl gewickelt. Hierdurch lässt sich am einfachsten eine Asymmetrie bewirken. Desweiteren ist es vorteilhaft, die Anzahl der Windung für einen Betrieb bei höheren Treibersignal-Frequenzen zu reduzieren, da sich i. A. die elektrische Impedanz der Spulen mit steigender Frequenz nachteilig erhöht.

Ferner wird durch die erfindungsgemäße Scan-Vorrichtung erreicht, dass das Biegeelement im Gegensatz zu der aus US 5 557 444 A bzw. DE 695 29 530 T2 bekannten Scan-Vorrichtungen quer zu seiner Längsachse und damit nur in einem lokal begrenzten, gemeinsamen Abschnitt von magnetischen Flusslinien durchdrungen ist. Hierdurch werden Wirbelströme deutlich minimiert und Kurzschlussbildung des magnetischen Flusses verhindert. Ferner erhöht sich auf diese Weise die Treiber-Effizienz und Drehmoment-Ausbeute in erheblichem Maße. Insbesondere ist es ausreichend, dass nur der durchflossene Abschnitt magnetisierbar bzw. magnetisch leitend ist, während die übrigen Abschnitte des Biegeelements aus nicht-magnetisierbarem Material bestehen können.

Um die sich allein aus dem magnetinduzierten Fluss ergebenden Symmetrie zwischen dem ersten und dem zweiten magnetischen Kreis zu erhalten, ist es nach einer weiteren vorteilhaften Ausführungsform der Erfindung vorgesehen, dass der Polschuh mit seiner ersten und zweiten Hälfte symmetrisch bezüglich einer Achse ausgebildet ist, welche senkrecht zur Längsachse des Biegeelements und symmetrisch durch den Magnet und dem magnetisierbaren Abschnitt des Biegeelements verläuft.

Desweiteren kann es vorgesehen sein, dass der Polschuh einstückig ausgebildet ist oder aus einem ersten Statorkern und einem davon separaten zweiten Statorkern besteht, welche die erste und die zweite Hälfte des Polschuhs bilden und vorzugsweise im Wesentlichen C-förmig ausgebildet sind. Vorzugsweise ist der Magnet symmetrisch zwischen beiden Statorkernen derart angeordnet, dass er beide Statorkerne miteinander verbindet. Alternativ können die beiden Statorkerne direkt aneinandergrenzen, wobei der Magnet im Angrenzungsbereich mit beiden Statorkernen magnetisch gekoppelt ist. Außerdem kann es in vorteilhafter Weise vorgesehen sein, dass der Polschuh im Wesentlichen rechteck-, O- oder D-förmig ausgebildet ist und zur Bildung der beiden freien Enden einen Unterbruch aufweist, in welchem der magnetisierbare Abschnitt des Biegeelements angeordnet ist. Hierdurch wird erreicht, dass die freien Enden des Polschuhs bzw. der ersten und zweiten Polschuhhälften bzw. der Statorkerne möglichst nahe an das Biegeelement heranreichen, so dass der magnetische Fluss zwischen dem Biegeelement und den Statorkernen maximal effizient und ohne Streuverluste koppelt. Desweiteren ist bevorzugt, dass die die freien Enden des Polschuhs bzw. der ersten und zweiten Polschuhhälften bzw. der Statorkerne einerseits und die Kanten des Biegeelements im magnetisierbaren Abschnitt andererseits abgeschrägt oder so geformt sind, dass sich eine weitgehende geometrische Überlappung zwischen den freien Enden und den angrenzenden Kanten bzw. Rändern des Biegeelementes ergibt.

Zur Unterstützung des magnetischen Flusses im ersten und zweiten Magnetkreis ist es nach einer weiteren vorteilhaften Ausgestaltung der Erfindung vorgesehen, dass der Magnet und der Polschuh bzw. der Magnet und die beiden Hälften des Polschuhs über ein Rückflusselement magnetisch miteinander gekoppelt sind.

Um eine möglichst gute Leitung des vom Magneten und den Antriebsspulen erzeugten magnetischen Flusses in den beiden weichmagnetischen Teilen der Magnetkreise zu erreichen, bestehen nach einer weiteren vorteilhaften Ausgestaltung das Rückflusselement, der Polschuh, der erste Statorkern und/oder der zweite Statorkern aus einem ferromagnetischen Material, gesintertem ferritischen oder ferromagnetischen Pulver. Als ferromagnetische Materialien hoher Permeabilität kommen bevorzugt Edelstahl, Nickel-Kobalt, Eisen, insbesondere von Weicheisen, oder eine Kombination dieser Materialien in Betracht.

Eine weitere mögliche Ausgestaltung betrifft die Ausgestaltung des Rückflusselements, des Polschuhs, des ersten Statorkerns und/oder des zweiten Statorkerns als Anordnung aus voneinander isolierten Lamellen ferromagnetischen und/oder weichmagnetischen Materials. Geeignete Materialien sind FeSi-, NiFe- oder CoFe-Blech, ein gepresstes Soft Magnetic Composite (SMC) oder gesintertes Weichferrit. Geeignete Blechstärken liegen zwischen 0,1 bis 0,5 mm.

Gemäß einem anderen weiterführenden Aspekt können die beiden Statorkerne und das Rückschlusselement aus einem einzigen Teil bestehen.

Gesinterte Pulver oder laminierte ferromagnetischen Materialien zeichnen sich durch einen besonders geringen spezifischen Durchgangswiderstand und eine hohe Sättigungsflussdichte aus. Da sich die Wirbelströmung umgekehrt proportional zum spezifischen Durchgangswiderstand verhält, kann auf diese Weise die Erzeugung von Wirbelströmen deutlich vermindert und die Treibereffizienz effektiv gesteigert werden.

Bei der Verwendung von Lamellen-Stapeln aus ferromagnetischem Material beträgt die Dicke einer einzelnen Lamelle vorzugsweise etwa 0,02 mm bis etwa 0,15 mm und die Dicke des Gesamtstapels etwa 2 mm bis etwa 25 mm. Weiterhin ist bevorzugt, dass die einzelnen Lamellen durch dünne Schichten eines Isolationsmaterials, beispielsweise eines Isolationslacks oder dergleichen, voneinander getrennt sind.

Um darüber hinaus die Kopplungseffizienz zu steigern bzw. die Streuverluste zu minimieren, ist es nach einer weiteren vorteilhaften Erfindung vorgesehen, zwischen dem magnetisierbaren Abschnitt und dem Magnet sowie den freien Enden des Polschuhs lediglich ein kleiner Luftspalt im Bereich von 0,5mm bis 1,5mm vorgesehen ist, der so gewählt ist, dass das Biegeelement zwischen dem Magnet und den freien Enden des Polschuhs kollisionsfrei oszillieren kann und von den magnetischen Flüssen maximal durchdrungen ist.

Nach einer weiteren vorteilhaften Ausgestaltung der Erfindung ist das Biegeelement bezüglich seiner Längsachse an beiden Enden in je einer Endhalterung fixiert, welche vorzugsweise aus einem unmagnetischen Material bestehen kann, da sie nicht zur Unterstützung des magnetischen Flusses beitragen muss.

Ferner kann eine Basisplatte aus einem vorzugsweise unmagnetischen Material vorgesehen sein, auf der die Endhalterungen, das Rückflusselement, der Polschuh, der erste Statorkern, der zweite Statorkern und/oder der Magnet festgelegt sind. Dies ist insbesondere bei einem einstückigen Stator mit Rückflusselement sinnvoll.

Als Magnet kommen nach einer weiteren vorteilhaften Ausgestaltung der Erfindung entweder ein Elektromagnet oder ein Permanentmagnet in Betracht, vorzugsweise ein Dipolmagnet, dessen Polachse senkrecht zur Längsachse (A-A) ausgerichtet ist. Ein Elektromagnet bietet den Vorteil, dass der vom ihm erzeugte statische magnetische Fluss, der durch den ersten und zweiten Magnetkreis läuft, und somit auch die Amplitude des Scan-Winkels beliebig verändert werden kann, ohne dass der Treiberstrom durch die Antriebsspulen verändert werden müsste.

Ein besonders geeigneter Magnet stellt ein Element, insbesondere ein Quader, aus gesintertem NdFeB dar, der anisotrop vorzugsgerichtet ist und dessen Polachse in Richtung einer Symmetrieachse des Polschuhs ausgerichtet ist. Der Magnet wird von einem sehr gut elektrisch leitenden Hohlprofil umschlossen, welches vorzugsweise aus Kupfer besteht. Dieses Hohlprofil sorgt für einen massiven Kurzschluss der höherfrequenten Wechselfelder und wird im Folgenden Kurzschlusswindung genannt.

Zur Erzeugung von im Wesentlichen symmetrischen Schwingungen das Biegeelement ist das Biegeelement bezüglich seines magnetisierbaren Abschnitts im Wesentlichen symmetrisch ausgebildet. Alternativ oder zusätzlich liegt der Schwerpunkt des Biegeelements in vorteilhafter Weise symmetrisch im Bereich des magnetisierbaren Abschnitts des Biegeelements.

Nach einer weiteren vorteilhaften Ausgestaltung der Erfindung ist der magnetisierbare Abschnitt als Zentralelement des Biegeelements ausgebildet, von dem zwei Verbindungsarme diametral ausgehen, die je mit einer, insbesondere trapezförmigen, Endlasche zum Fixieren des Biegeelements in den Endhalterungen verbunden sind. Eine derartige Ausgestaltung des Biegeelements zeichnet sich durch eine hohe Symmetrie und besonders gute Schwingungseigenschaften aus.

Ferner ist es in vorteilhafter Weise vorgesehen, dass das Zentralelement flächig, insbesondere scheibenförmig ausgebildet ist und/oder die Verbindungsarme in Richtung der Statoren quer zur Längsrichtung des Biegeelements überragt. Desweiteren sind die Verbindungsarme bevorzugt dünn und im Querschnitt rechteckig ausgebildet, um insbesondere Drehschwingungen zu unterstützen.

Die Form der Schwingungen kann i.A. komplex sein, da das Biegeelement abhängig von seiner Formgebung und dem verwendeten Material in mehr als nur einem Modus schwingen kann. So können sich harmonische Schwingungen des Grundmodus und Moden höherer Ordnung entwickeln. Insbesondere hängt etwa die Federkonstante des Biegeelements u.a. von seiner Länge, Breite und Dicke und dem verwendeten Material ab. Durch geeignete numerische Methoden zur Gestaltung des Biegeelements kann eine bestimmte harmonische Mode oder eine bestimmte Kombination von Moden begünstigt werden. Daher ist es nach einer weiteren vorteilhaften Ausgestaltung der Erfindung vorgesehen, durch geeignete Formermittlung bzw. -gebung und/oder geeignete Materialwahl die Schwingungsformen bzw. Schwingungsmoden des Biegeelementes in Frequenz und Amplitude zu beeinflussen bzw. vorzubestimmen, beispielsweise die Amplitude der Torsionsschwingung erster Ordnung um mindestens eine Größenordnung über alle anderen Moden zu erhöhen.

Nach einer weiteren vorteilhaften Ausgestaltung der Erfindung besteht das Biegeelement zumindest teilweise aus einem ferromagnetischen Material oder aus einem Faserverbundmaterial oder einer Kombination dieser Materialien. Bevorzugt sind das Zentralelement, der auch als Anker bezeichnet werden kann, die Schwingungsarme und die Endlaschen einstückig und/oder zumindest teilweise aus einem ferromagnetischen Material hergestellt. Allerdings ist es nicht erforderlich, dass alle Elemente des Biegeelements bzw. das gesamte Biegeelement aus ferromagnetischem Material bestehen bzw. magnetisch sind. Lediglich der der von dem ersten und zweiten Magnetkreis durchflossene Teilbereich bzw. das Zentralelement muss zumindest bereichsweise magnetisierbar sein bzw. aus ferromagnetischem Material bestehen. Dies betrifft insbesondere das Zentralelement, das Arbeitsluftspalte definiert. Alternativ ist es möglich, dass das Biegeelement aus einem Faserverbundmaterial besteht, in dem sich entweder ferromagnetisches Material befindet oder auf dem ferromagnetisches Material, beispielsweise in Form einer Beschichtung oder eines Einlegeteils, aufgebracht ist.

Da die erfindungsgemäße Scan-Vorrichtung insbesondere als optischer Resonanzscanner ausgebildet ist, weist nach einer weiteren vorteilhaften Ausgestaltung der Erfindung das Biegeelement im seinem magnetisierbaren Abschnitt und/oder auf dem Zentralelement, insbesondere auf seiner dem Magneten abgewandten Seite, wenigstens ein lichtreflektierendes und/oder lichtemittierendes und/oder lichtdetektierendes Element auf, beispielsweise eine polierte Oberfläche, einen Spiegel oder ein Beugungsgitter.

Zur Erfassung der gesamten Schwingungsamplitude und/oder der Schwingungsfrequenz des oszillierenden Biegeelementes, ist nach einer weiteren vorteilhaften Ausgestaltung der Erfindung, vorzugsweise oberhalb des Biegeelements, ein optisches Sensorsystem mit einer Lichtquelle und einem intensitäts- und/oder positionssensitiven Detektor vorgesehen. Dies ist von Vorteil, da an gleicher Stelle ein Nutzstrahl des Systems abgelenkt wird. Von Bedeutung ist dabei, dass über das optische Sensorsystem die gesamte Schwingungsamplitude erfassbar ist und nicht nur ein Teilbereich, so dass die gesamte Amplitude mit einer entsprechenden Steuereinrichtung regelbar ist. Hierdurch lässt sich zusätzlich zur Frequenz auch die Auslenkung des oszillierenden Biegeelementes regeln, sodass eine präzisere Regelung möglich ist und ein Einfluss durch Umgebungsbedingungen ausgeglichen werden kann. Zudem vergrößert sich durch die Regelung der Amplitude der mögliche Einsatzbereich der erfindungsgemäßen Scan-Vorrichtung.

Vorzugsweise sendet die Lichtquelle einen Lichtstrahl in Richtung des Zentralelements des Biegeelements aus, der von dort in Richtung des optischen Detektors reflektiert wird, wobei der Detektor in Abhängigkeit des Drehwinkels des Zentralelements die Modulation des reflektierten Lichtstrahls erfasst. Insbesondere ist das Sensorsystem dazu geeignet, die gesamte Schwingungsamplitude und die Schwingungsfrequenz sowie mögliche Verzerrungen der Schwingung, die etwa durch ein defektes Biegeelement verursacht werden können, zu erfassen. Zur Erfassung der gesamten Schwingungsamplitude liegt der Reflexionspunkt bevorzugt im Flächenschwerpunkt des Zentralelements. Des Weiteren lässt sich mit diesem Sensorsystem gleichzeitig die Oszillationsfrequenz erfassen, um diese zu steuern und zu regeln, um z.B. das Biegeelement in Resonanz zu halten.

Das Lichtquelle kann eine kohärente oder nicht-kohärente Lichtquelle sein, etwa eine LED (Light Emitting Diode) oder eine Laserdiode. Als Detektor ist etwa ein sogenanntes Position Sensitive Device (PSD), ein sogenanntes Charge Coupled Device (CCD), eine Anordnung von diskreten Photodioden oder dergleichen denkbar.

Gemäß einem weiteren Aspekt der vorliegenden Erfindung sind ein Messsystem zur Bestimmung des Drehwinkels und ein entsprechender Regelkreis, insbesondere in einem Leistungsverstärker, zur Konstanthaltung des Schwenkbereichs des Zentralelements vorgesehen. Damit kann die Amplitude des Zentralelements konstant gehalten werden. Desweiteren können so Taumelschwingungen des Ankers und somit des Spiegels vermieden werden, was durch sogenannte horizontale Querkräfte durch eine planare Lage beider Polflächen des Ankers in einer Ebene geschieht.

Eine Schwankung der Vertikalkräfte kann gemäß einer weiterführenden Ausgestaltung durch eine Ummantelung des Magneten mit einer Kurzschlusswindung aus elektrisch gut leitendem Material unterbunden werden.

Ein anderer Aspekt der vorliegenden Erfindung sieht vor, dass Polflächen des Ankers eine durchweg glatte und ebene Ankerunterseite, also der den Polflächen des Stators zugewandten Seite, bilden, um eine planare Lage der Polflächen des Ankers zu gewährleisten.

Das Schwingelement kann aus einem weichmagnetischen Anker besteht, der zwischen den Torsionsfedern so aufgehangen und befestigt ist, so dass funktionsgewünscht Drehschwingungen um diese Torsionsachse ausgeführt werden können. Auf dem Anker ist ein optischer Spiegel befestigt, der den Licht- oder Laserstrahl ablenkt. Die Resonanzfrequenz fo ergibt sich aus der Torsionsfederkonstante $C_T$ und dem Massenträgheitsmoment $J_A$ der bewegten Massen bezüglich des Drehpunktes A:

$$f_0 = \frac{1}{2\pi}\sqrt{\frac{C_T}{J_A}}$$

In einem erfindungsgemäßen Fall können Auflager, Torsionsfedern und Spiegel aus einem Stück hergestellt werden. Wenn dieses Material weichmagnetisch ist, so kann man den Spiegel auch als Anker für einen elektromagnetischen Antrieb benutzen. Dies spart Fertigungszeit und vor allem Gewicht.

Der Antrieb dient dazu, das System in seiner Resonanzfrequenz fo zum Schwingen anzuregen und um die Dämpfung des schwingenden Systems zu kompensieren. Diese Verluste werden hauptsächlich durch den Luftwiderstand des Schwingers und nur in geringem Maße durch Gitterbewegungen im Torsionsstab hervorgerufen sowie im Antrieb bei der Erzeugung des Wechselflusses in Form von Stromwärmeverlusten in der Wicklung und durch Ummagnetisierungsverluste in den Magnetkreisteilen verursacht.

Der Antrieb muss nicht zwingend einen sinusförmigen Drehmomentverlauf erzeugen. Es stellt sich ein Gleichgewichtszustand zwischen den von einer Auslenkung a und Frequenz f abhängigen Verlusten $P_v$ und der durch das Drehmoment periodisch zugeführten mechanischen Leistung $P_m$ ein

$$P_v = f(a; f) = P_m = 2\pi f * M$$

Der Stator, ein in der Regel weichmagnetischer Kreis, stellt gemäß einer weiterführenden Ausführungsform ein U- oder C-Joch mit einer ggf. auf beide Schenkel symmetrisch aufgeteilten Wicklung dar.

Symmetrisch zu den Schenkeln ist in manchen Ausgestaltungen vom Grunde des Jochs bis kurz unterhalb des Ankers ein Permanentmagnet angeordnet, der eine Gleichfeld-Vormagnetisierung des Magnetkreises bewirkt. Ein zwischen Magnet und Anker vorhandener Luftspalt dient zur Sicherung der Bewegungsfreiheit des Ankers.

Der zentrisch über dem Magneten drehbar gelagerte Anker bildet mit Polflächen der beiden Schenkel Arbeitsluftspalte. Der insbesondere permanentmagnetisch erregte magnetische Fluss überquert den Luftspalt zwischen Magnet und Anker. Im Anker teilt sich der Fluss nach beiden Seiten zu den Arbeitsluftspalten hin auf, durchtritt diese, fließt in die Außenschenkel, den Rücken des Jochs und schließt sich wieder im Magnet.

In manchen Ausgestaltungen bevorzugt in Reihe geschaltete Spulen auf den Außenschenkeln erzeugen proportional zum Strom einen elektrisch erregten magnetischen Fluss, der in einem Arbeitsluftspalt zum bevorzugt permanentmagnetisch erzeugten Fluss gleich gerichtet und im anderen Arbeitsluftspalt entgegen gerichtet ist. Durch die unterschiedlichen Flüsse entsteht nun eine Kraftdifferenz zwischen den in den Arbeitsluftspalten am Anker angreifenden Kräften. Über den Hebelarm ergibt sich dann ein Drehmoment auf den Spiegel.

Die Kraft auf Grund eines magnetischen Flusses $\Phi$ auf die Grenzflächen $A_\delta$ im Luftspalt $\delta$ berechnet sich zu

$$F = \Phi^2/(2\mu_0 * A_\delta)$$

Unbestromt und im nicht ausgelenkten Zustand des Ankers sind beide permanentmagnetischen Teilflüsse $\Phi_p$ gleich und somit die resultierende Kraft zur Drehmomentbildung Null. Proportional zum Strom i entsteht der elektrisch

erregte Fluss $\Phi_{el}$. Aus der Kraftgleichung Fres = $F_{\delta 1}$ - $F_{\delta 2}$ folgt:

$$(\Phi_p + \Phi_{el})^2 - (\Phi_p - \Phi_{el})^2 = 4\,\Phi_p{*}\Phi_{el} \qquad\qquad M \sim \Phi_p{*}\,i$$

Die resultierende Kraft und somit das Drehmoment sind damit proportional zum permanentmagnetisch erregten Fluss und zum Strom. Die Hebelarmlänge gemäß Angriffswinkel zum Drehpunkt ist ebenfalls von direktem Einfluss. Somit sind auch die resultierenden Kräfte und das Drehmoment proportional der Remanenzinduktion des Permanentmagneten, aber die Anzugskräfte an den Grenzflächen der Luftspalte, quadratisch davon abhängig.

Querkräfte werden in manchen Varianten der erfindungsgemäßen Scan-Vorrichtung durch horizontal ebene Polflächen am Anker vermieden. Dadurch können an diesen Grenzflächen im Wesentlichen nur vertikale Kräfte angreifen. Dies hat auch noch den Vorteil, dass sich dadurch der größtmögliche Hebelarm für die Drehmomentbildung ergibt.

Ein weiterer Aspekt der Erfindung kann vorsehen, dass die glatte Unterseite durch weichmagnetische Aufbauten mindestens in den Flächenabmessungen des Permanentmagneten zur Übernahme des permanentmagnetischen Flusses unterbrochen ist.

Darüber hinaus kann in manchen Ausgestaltungen vorgesehen sein, dass die Kurzschlusswindung aus einem Hohlprofil aus Kupfer besteht, in welches der Magnet, insbesondere Permanentmagnet, hineinpasst. Die Kurzschlusswindung weist bevorzugt höchstens die Länge des Magneten auf und hat eine Wandstärke von mindestens 0,2 mm, vorzugsweise aber 1 bis 2 mm.

Die Kurzschlusswindung kann in einer anderen Ausgestaltung auch aus einem Kupferblech bestehen, welches um den Magneten gebogen und die Berührungsstelle der Kanten geschlossen, insbesondere miteinander verschweißt oder verlötet ist. Das Kupferblech kann die zuvor genannten Dicken aufweisen.

Alternativ kann die Kurzschlusswindung auch aus Aluminium oder einem anderen elektrisch gut leitendem Material bestehen.

Ein anderer weiterführender Aspekt der erfindungsgemäßen Scan-Vorrichtung sieht vor, dass freie Enden der Polschuhe zu dem magnetisierbaren Abschnitt derart ausgerichtet sind, dass bei maximaler Auslenkung des magnetisierbaren Abschnitts ein paralleler minimaler Luftspalt ergibt. Dies hilft zusätzlich, Taumelbewegungen zu unterdrücken.

Gemäß einem weiterführenden Aspekt kann eine dem magnetisierbaren Abschnitt zugewandte Stirnseite des Magneten im Ruhezustand des magnetisierbaren Abschnitts parallel zu dem magnetisierbaren Abschnitt ausgerichtet sein.

Desweiteren kann gemäß einem darüber hinausführenden Aspekt vorgesehen sein, dass die freie Enden der Polschuhe und eine dem magnetisierbaren Abschnitt zugewandte Stirnseite des Magneten und der magnetisierbare Abschnitt in einer Projektion entlang der Symmetrieachse des Polschuhs übereinander liegend angeordnet sind.

Damit lassen sich im Wesentlichen stets senkrechte Krafteinleitungen in den magnetisierbaren Abschnitt bzw. Anker erreichen und Taumelbewegungen desselben wirkungsvoll unterbinden.

Die Effizienz der Unterbindung von Taumelbewegungen des magnetisierbaren Abschnitts steigt desweiteren durch zusätzliches Vorsehen der Kurzschlusswindung.

Ein weiterer möglicher Aspekt der vorliegenden Erfindung sieht vor, dass der Stator aus einem lamellierten Blechpaket aus vorzugsweise 0,05 bis 0,5 mm dicken weichmagnetischem Material auf der Basis von unlegiertem bzw. niedriglegiertem Stahl, FeSi, FeCo, FeNi oder einem Eisenpulververbundwerkstoff, sogenanntem Soft Magnetic Composite (SMC), aber auch aus gesintertem Weichferrit besteht.

Zur variablen Regelung der vorzugsweise gesamten Schwingungsamplitude und/oder zur Stabilisierung der Schwingungsamplitude über einen weiten Temperaturbereich und/oder zur Maximierung der Auflösung der Schwingungsamplitude ist nach einer weiteren vorteilhaften Ausgestaltung der Erfindung eine Steuereinrichtung vorgesehen, die mit dem optischen Sensorsystem und/oder der ersten und zweiten Antriebsspule wirkverbunden ist und über die die gesamte Schwingungsamplitude und/oder die Schwingungsfrequenz des Biegeelements steuer- und/oder regelbar ist. In vorteilhafter Weise kann der Scanner somit auch unter nicht-konstanten Umgebungseinflüssen betrieben werden. Ferner erübrigt die Regelung der Amplitude bei Verwendung des Scanners als Display-System oder in einem Laser-Materialbearbeitungssystem den Einsatz einer teuren Zoom-Optik für den gescannten Lichtstrahl, um die Größe des Scan-Feldes zu variieren. Die Größe des Scan-Feldes kann in einfacher Weise nur durch Variation der Amplitude geregelt werden.

Weitere Ziele, Vorteile, Merkmale und Anwendungsmöglichkeiten der vorliegenden Erfindung ergeben sich aus der nachfolgenden Beschreibung eines Ausführungsbeispieles anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:

Fig. 1    perspektivische Ansicht einer möglichen Ausführungsform eines optischen Resonanzscanners mit einem optischen Sensorsystem gemäß der vorliegenden Erfindung,

Fig. 2    Explosionsdarstellung des optischen Resonanzscanners gemäß Fig. 1,

Fig. 3    Explosionsdarstellung der elektromagnetischen Antriebskomponenten des optischen Resonanzscanners gemäß Fig. 1,

Fig. 4    eine Seitenansicht der elektromagnetischen Antriebskomponenten gemäß Fig. 3.

Fig. 5    eine perspektivische Ansicht einer weiteren möglichen Ausführungsform eines optischen Torsionsresonanzschwingers mit einem optischen Sensorsystem gemäß der vorliegenden Erfindung,

Fig. 6    Explosionsdarstellung des optischen Torsionsresonanzschwingers gemäß Fig. 5,

Fig. 7    Explosionsdarstellung der elektromagnetischen Antriebskomponenten des optischen Torsionsresonanzschwingers gemäß Fig. 5, und

Fig. 8    eine Seitenansicht der elektromagnetischen Antriebskomponenten gemäß Fig. 7.

In den nachfolgenden Figuren werden zur besseren Lesbarkeit gleiche oder gleichwirkende Bauteile unterschiedlicher Ausführungsformen mit gleichen Bezugszeichen versehen.

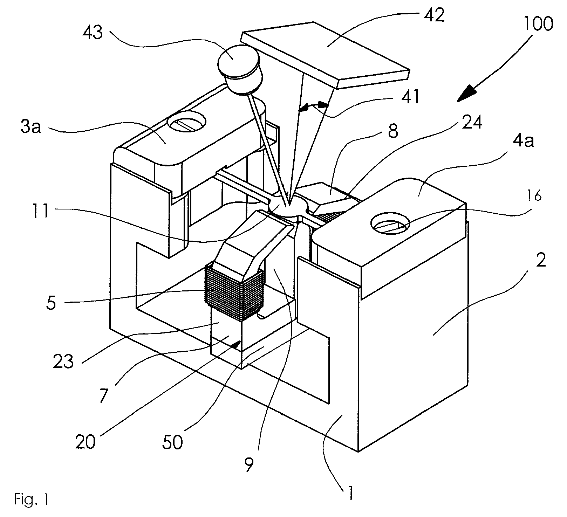

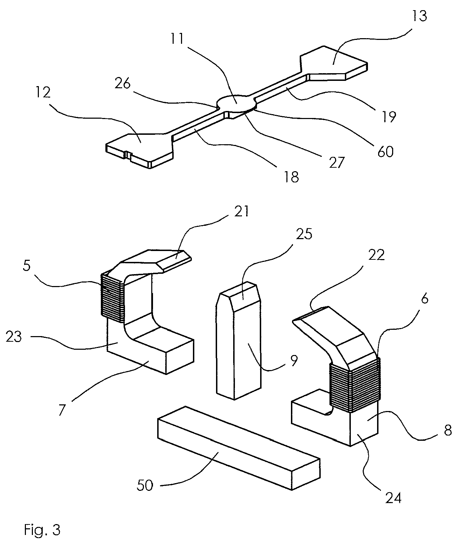

Die Figuren 1-4 zeigen ein mögliches Ausführungsbeispiel eines optischen Resonanzscanners 100 mit einem optischen Sensorsystem 40 gemäß der vorliegenden Erfindung. Das optische Sensorsystem 40 ist vom Typ eines Torsionsresonanzschwingers.

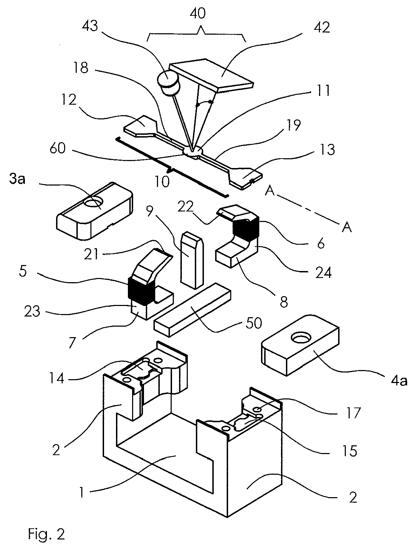

Bezugnehmend auf Fig. 1 und 2 umfasst der Scanner 100 eine im Wesentlichen C-förmige Basisplatte 1, welche den mechanischen Träger für den Scanner 100 bildet. Die beiden kurzen Flanken der C-förmigen Basisplatte 1 bilden zusammen mit zwei Fixierplatten 3a, 4a Endhalterungen 2 zur Aufnahme und Fixierung eines länglichen, federelastischen Biegeelementes 10. Zur Fixierung des Biegeelementes 10 bzw. Montage der Fixierplatten 3a, 4a auf den kurzen Flanken der C-förmigen Basisplatte 1, weisen die Fixierplatten 3a, 4a eingesenkte Schraubenlöcher auf, über die Schrauben 16 durch die Halteplatten 3a, 4a in entsprechende Gewindelöcher 17 in den kurzen Flanken der Basisplatte 1 eingeschraubt werden können. Alternativ können die Grundplatte 1 und die Fixierplatten 3a, 4a als ein Teil ausgebildet sein.

Bezugnehmend auf Fig. 1 bis 4 weist der Scanner 100 als wesentliches Bauteil das Biegeelement 10 auf, welches bezüglich seiner Längsachse A-A an beiden Enden in den Endhalterungen 2 fixiert ist. Das Biegeelement weist ferner in seinem Schwerpunkt S bzw. Zentrum einen magnetisierbaren Abschnitt 60 auf, der als eigentliches rotierendes bzw. oszillierendes Element des Scanners 100 dient. Der magnetisierbare Abschnitt 60 ist als Zentralelement 11 des Biegeelements 10 ausgebildet, von dem unter Bildung der Längsachse A-A diametral zwei Schwingungsarme 18, 19 ausgehen, die je mit einer, im vorliegenden Ausführungsbeispiel trapezförmigen Endlasche 12, 13 zum Fixieren des Biegeelements in den Endhalterungen 2 verbunden sind. Die Schwingungsarme 18, 19 bilden Torsionsfedern. Das Biegeelement 10 mit Zentralelement 11, Schwingungsarmen 18, 19 und Endlaschen 12, 13 ist, wie im vorliegenden Ausführungsbeispiel, vorzugsweise einstückig ausgebildet. Um eine Drehschwingung des Biegeelements um seine Längsachse A-A zu ermöglichen, sind die Schwingungsarme 18, 19 - wie im vorliegenden Ausführungsbeispiel - im Querschnitt vorzugsweise dünn und rechteckig ausgebildet.

Die Endlaschen 12, 13 des Biegeelements 10 sind - wie zuvor beschrieben - in den Endhalterungen 2 fixiert. Dazu weisen im vorliegenden Ausführungsbeispiel die Stirnflächen der beiden kurzen Flanken der C-förmigen Basisplatte 1 Aussparungen 14, 15 auf, in denen die Endlaschen 12, 13 aufgenommen und mit den Fixierplatten 3a, 4a und den Schrauben 16 festgeklemmt sind. Alternativ können die Endlaschen 12, 13 auch geschweißt oder direkt mit der Basisplatte 1 verschraubt werden. Es ist bevorzugt, dass die Befestigungsmittel so ausgebildet sind, dass keine der an der Drehschwingung beteiligten Bereiche des Biegeelements 10 behindert werden.

Desweiteren ist das Zentralelement 11 flächig, insbesondere scheibenförmig, ausgebildet und überragt die Schwingungsarme 18, 19 quer zur Längsrichtung A-A des Biegeelements 10, so dass sich in der Draufsicht eine allgemein elliptische oder kreisförmige Form ergibt.

Das Zentralelement 11 umfasst ferner ein oder mehrere lichtreflektierende, lichtemittierende oder lichtdetektierende Elemente, etwa eine polierte Oberfläche des Zentralelements 11, einen aufgedampften Film aus Metall, einen mehrschichtigen Dünnfilm-Reflektor, ein Beugungsgitter oder einen Spiegel mit reflektierender Oberfläche. Im vorliegenden Ausführungsbeispiel ist die Oberfläche des kreisförmigen Zentralelements 11 poliert und dient insoweit als lichtreflektierendes Element.

Bezugnehmend auf Fig. 1 bis 4 ist unterhalb des Zentralelements 11 zum Biegeelement 10 beabstandet ein Magnet 9 angeordnet. Der Magnet 9 kann z.B. ein Permanentmagnet, ein Elektromagneten oder dergleichen sein. Gemäß der Erfindung ist der Magnet 9 derart angeordnet, dass der vom ihm erzeugte magnetische Fluss $\Phi_M$ symmetrisch in den oder aus dem magnetisierbaren Abschnitt 60 des Biegeelements 10 senkrecht zu dessen Längsachse A-A gerichtet ist. Es ist bevorzugt, dass der Magnet 9 ein Dipolmagnet ist, wobei die Polachse - wie im vorliegenden Ausführungsbeispiel - in vertikaler Richtung senkrecht zur Längsachse A-A des Biegeelementes 10 orientiert ist. Desweiteren ist es bevorzugt, dass der Luftspalt zwischen dem Biegeelement 10 und dem Magneten 9, insbesondere zwischen der Polspitze 25, derart klein ist, dass der Magnetfluss $\Phi_M$ des Magneten 9 möglichst effizient in das Zentralelement 11 bzw. den magnetisierbaren Abschnitt 60 des Biegeelements 10 koppelt. Der Magnet 9 kann eine beliebige Form haben. Vorliegend ist der Magnet 9 im Wesentlichen quaderförmig mit einer angefasten Polspitze 25. Denkbar ist aber auch, dass der Magnet 9 im Allgemeinen zylindrisch ausgebildet ist.

An den gegenüberliegenden Längsseiten des Magneten 9 sind gemäß der Erfindung ein erster und zweiter Statorkern 7, 8 angeordnet, um die eine erste bzw. eine zweite elektromagnetische Antriebsspule 5, 6 gewickelt sind. Erster und zweiter Statorkern 7, 8 bilden die erste und zweite Hälfte 23, 24 eines Polschuhs 20. Der Polschuh 20 ist der bezüglich einer Achse B-B symmetrisch ausgebildet, welche senkrecht zur Längsachse A-A des Biegeelements 10 und symmetrisch durch den Magnet 9 und den magnetisierbaren Abschnitt 60 des Biegeelements 10 verläuft.

Bevorzugt sind die erste und die zweite Antriebsspule 5, 6 in entgegengesetzter Richtung gewickelt und weisen die gleiche Wicklungszahl auf. Die beiden Statorkerne 7, 8 und der Magnet 9 sind über ein Rückflusselement 50 magnetisch gekoppelt. Gemäß der Erfindung ist das Biegeelement 10 symmetrisch zwischen den offenen Enden 21, 22 des Polschuhs 20 bzw. der beiden Statorkerne 7, 8, derart angeordnet, dass zwischen dem magnetisierbaren Abschnitt 60 des Biegeelements 10 und dem ersten Statorkern 7 bzw. dem magnetisierbaren Abschnitt 60 des Biegeelements 10 und dem zweiten Statorkern 8 ein magnetischer Fluss, insbesondere ein von der ersten bzw. zweiten Antriebsspule 5, 6 erzeugter magnetischer Fluss $\Phi_1$, $\Phi_2$, im Wesentlichen senkrecht zur Längsachse A-A übertragbar ist.

Folglich sind die Statorkerne 7, 8 rechtwinklig zur Längsachse A-A des Biegeelements 10 und im gleichen Abstand zum Magnet 9 und zum Biegeelement 10 angeordnet. Die Statorkerne 7, 8 enden kurz vor den äußeren Rändern 26, 27 des Biegeelements 10, so dass sich nur ein schmaler Luftspalt zwischen den Spitzen 21, 22 der Statorkerne 7, 8 und dem Zentralelement 11 des Biegeelements 10 ergibt. Der erste Statorkern 7 und der zweite Statorkern 8 sind im vorliegenden Ausführungsbeispiel im Wesentlichen C-förmig ausgebildet. Es ist ferner bevorzugt, dass die Enden 21, 22 - wie im vorliegenden Ausführungsbeispiel - abgewinkelt und abgeschrägt oder so geformt sind, dass sich eine weitgehende geometrische Überlappung zwischen den Enden 21, 22 und den Kanten 26, 27 des Biegeelements 10 ergibt.

Erfindungsgemäß ist der Magnet 9 ebenfalls mit dem Rückflusselement 50 magnetisch gekoppelt und symmetrisch bzgl. der freien Enden 21, 22 des ersten und zweiten Statorkerns 7, 8 derart angeordnet, dass sich durch den Magneten 9, das Rückflusselement 50 und den ersten Stator 7 bzw. durch den Magneten 9, das Rückflusselement 50 und den zweiten Stator 8 ein erster und ein zweiter magnetischer Kreis 30, 31 ausbilden, die zueinander gegensinnig in einer Ebene senkrecht zur Längsachse A-A durch den magnetisierbaren Abschnitt 60 des Biegeelementes 10 verlaufen.

Dabei verursachen gleiche und entgegengesetzte Überlagerungen der magnetischen Flüsse $\Phi_1$, $\Phi_2$, $\Phi_M$ eine Torsionskraft auf das Biegeelement 10, welches infolgedessen eine Drehschwingung um seine Längsachse A-A ausführt. Die Luftspalte zwischen dem Zentralelement 11 und dem Magnet 9 sowie den freien Enden 21, 22 der Statorkerne 7, 8 sind gerade so groß gewählt, dass das Zentralelement 11 zwischen dem Magnet 9 und den freien Enden 21, 22 der Statorkerne 7, 8 kollisionsfrei oszillieren kann und von den magnetischen Flüssen $\Phi_1$, $\Phi_2$, $\Phi_M$ maximal durchdrungen ist.

Das Rückflusselement 50 ist mit der Grundplatte 1 kraftschlüssig verbunden, bevorzugt geklemmt oder geklebt. Die Statorkerne 7, 8 sind wiederum auf dem Rückflusselement 50 befestigt, so dass sie zusammen mit dem Rückflusselement 50 einen im Wesentlichen D-förmigen Polschuh bilden, welcher zwischen den freien Enden 21, 22 des ersten und zweiten Statorkerns 7, 8 einen Unterbruch aufweist, in dem das Zentralelement 11 des Biegeelements 10 angeordnet ist. Die Fig. 1 bis 4 zeigen das Rückflusselement 50 und die beiden Statorkerne 7, 8 als Einzelteile. In einer alternativen Ausführungsform können das Rückflusselement 50 und die Statorkerne 7, 8 auch einstückig ausgebildet sein.

Der Magnet 9 ist ebenfalls am Rückflusselement 50 mittels Klemm-, Klebe- oder Schraubverbindungen, angebracht. Alternativ können der Magnet 9 und das Rückflusselement 50 und/oder die Statorkerne 7, 8 auch einstückig ausgebildet sein.

Das Zentralelement 11, die Statorkerne 7, 8, der Magnet 9 und/oder das Rückflusselement 50 sind vorzugsweise aus ferromagnetischen Materialien hergestellt. Bevorzugt sind auch das Biegeelement 10, die Schwingungsarme 18, 19 und/oder die Endlaschen 12, 13 zumindest teilweise aus einem ferromagnetischen Material hergestellt. Allerdings ist es nicht erforderlich, dass alle Elemente des Biegeelements 10 aus ferromagnetischem Material bestehen bzw. magnetisch sind. Lediglich der Abschnitt 60 bzw. das Zentralelement 11 muss magnetisch leitend bzw. magnetisierbar sein. Als ferromagnetische Materialien kommen insbesondere Edelstahl, Nickel-Kobalt und Eisen oder eine Kombination dieser Materialien in Betracht.

Vorzugsweise ist das Biegeelement 10 aus einem Federstahl hergestellt und bildet mit den Schwingungsarmen 18, 19 eine Torsionsfeder, deren Federkonstante von der Länge, Breite und Dicke und dem Material der Schwingungsarme 18, 19 bestimmt ist. Alternativ ist es möglich, dass das Biegeelement 10 aus einem Faserverbundmaterial besteht, in dem sich entweder ferromagnetisches Material befindet oder auf dem ein ferromagnetisches Material, beispielsweise durch Beschichten, kraftschlüssig aufgebracht ist.

Demgegenüber bestehen der Polschuh 20 bzw. die Statorkerne 7, 8 und/oder das Rückflusselement 50 vorzugsweise aus Weicheisen oder gesintertem Ferritpulver oder einem laminierten ferromagnetischen Material, beispielsweise aus mehreren dünnen, voneinander isolierten Schichten eines ferromagnetischen Materials.

Bei der Verwendung von Lamellen-Stapeln aus ferromagnetischem Material beträgt die Dicke pro Lamelle vorzugsweise etwa 0,02mm bis etwa 0,15mm, während die gesamt Dicke des Stapels im Bereich von etwa 2mm bis etwa 25mm liegt. Es ist auch bevorzugt, dass die einzelnen Lamellen über extrem dünne Schichten aus einem isolierenden Material, beispielsweise Lack oder dergleichen, voneinander getrennt sind. Derartige Lamellen-Stapel aus ferromagnetischem Material verfügen über eine hohe Sättigungsflussdichte und minimieren die Ausbildung von Wirbelströmen.

Die übrigen Komponenten des Scanners 100 können aus nicht-ferromagnetischem Material bestehen, sofern sie nicht zur Leitung und Unterstützung der magnetischen Flüssen $\Phi_1$, $\Phi_2$, $\Phi_M$ beitragen. Die Basisplatte 1 und die Endhalterungen 2 bzw. die Fixierplatten 3a, 4a können aus jedem Material gefertigt sein, welches eine stabile Fixierung des Biegeelements 10 sicherstellt.

Im vorliegenden Ausführungsbeispiel gemäß den Fig. 1 und 2 ist der Scanner 100 mit einem optischen Sensorsystem 40 ausgestattet, das dazu ausgebildet ist, die gesamte Schwingungsbewegung des Zentralelements 11 zu erfassen. Dazu weist das Sensorsystem im vorliegenden Ausführungsbeispiel ein lichtemittierendes Element bzw. eine Lichtquelle 43 auf, die einem Lichtstrahl in Richtung des Zentralelements 11 des Biegeelements 10 aussendet, der dort reflektiert wird und dann unter einem Aufspannwinkel 41 auf einen optischen Detektor 42 auftrifft, der dazu geeignet ist, die Modulation des Lichtstrahls proportional zum Drehwinkel des Zentralelements 11 zu detektieren. Das vorliegende optische Sensorsystem ist insbesondere in der Lage, die gesamte Schwingungsamplitude, die Schwingungsfrequenz sowie mögliche Verzerrungen der Schwingung, die etwa durch ein defektes Biegeelement 10 verursacht werden können, zu erfassen.

Die Lichtquelle 43 kann eine kohärente oder nicht-kohärente Lichtquelle sein, etwa eine LED (Light Emitting Diode) oder Laserdiode. Als Detektor kommen beispielsweise ein sogenanntes "Position Sensitive Device" (PSD), ein sogenanntes "Charge Coupled Device" (CCD), eine Anordnung von diskreten Photodioden oder dergleichen in Betracht.

Bevorzugt liegt der Reflexionspunkt im Flächenschwerpunkt des Zentralelements 11, so dass die gesamte Schwingungsamplitude effektiv erfasst werden kann. Im hier gezeigten Ausführungsbeispiel ist es aus Platzgründen nicht möglich, das Sensorsystem 40 unterhalb des Zentralelements 11 anzuordnen, wobei eine Anbringung des Sensorsystems 40 unterhalb der Schwingungsarme 18, 19 ohnehin nicht ausreichen würde, die gesamte Schwingungsamplitude des Zentralelements 11 zu erfassen. Daher ist das optische Sensorsystem 40 im vorliegenden Ausführungsbeispiel oberhalb des Zentralelements 11 angeordnet.

Des Weiteren kann eine hier nicht dargestellte Steuereinrichtung vorgesehen sein, die mit dem optischen Sensorsystem 40 und/oder der ersten und zweiten Antriebsspule 5, 6 wirkverbunden ist und die die Schwingungsamplitude und/oder die Schwingungsfrequenz steuert und/oder regelt. Durch diese Regelung ist es auch möglich den Aussteuerungsbereich gezielt zu verändern, z.B. um eine Zoomwirkung zu erreichen, ohne dass eine aufwändige Optik vorgesehen sein muss.

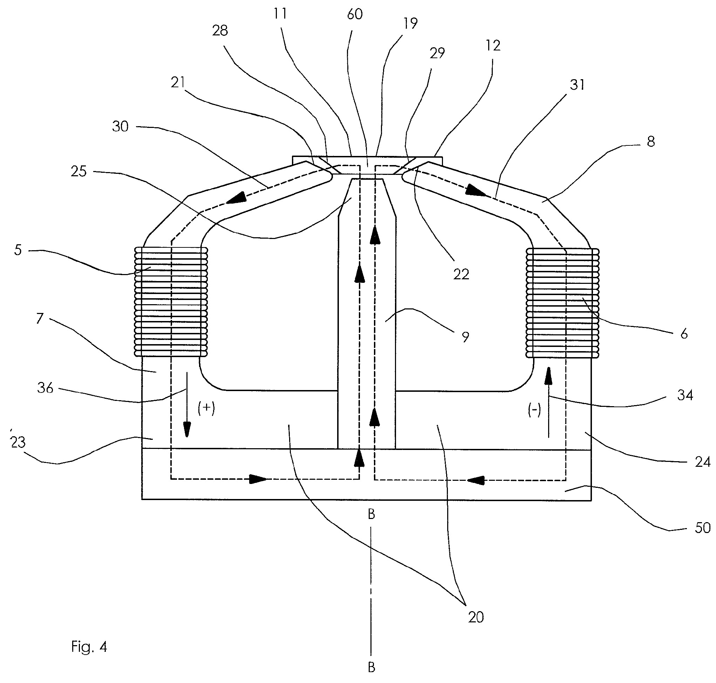

Nachfolgend wird die Arbeitsweise der Scan-Vorrichtung 100 erläutert: Sofern die Antriebsspulen 5, 6 stromlos sind, wird die Scan-Vorrichtung 100 lediglich vom statischen magnetische Fluss $\Phi_M$ des Magneten 9 durchdrungen. Ist der Magnet 9 beispielsweise - wie in Fig. 4 gezeigt - ein Dipol-Permanentmagnet, dessen Nordpol dem Zentralelement 11 direkt gegenüberliegt und dessen Südpol mit dem Rückflusselement 50 gekoppelt ist, so verläuft der vom Magneten 9 erzeugte konstante magnetische Fluss $\Phi_M$ vom Nordpol ausgehend vertikal nach oben und über den Luftspalt in das Zentralelement 11 des Biegeelements 10. Wie Fig. 4 weiter zu entnehmen ist, teilt sich der Fluss in die zwei i.A. symmetrische, koplanare Magnetkreise, nämlich den ersten Magnetkreis 30 und den zweiten Magnetkreis 31, welche senkrecht zur Längsachse A-A des Biegeelements 10 in entgegengesetzte Richtungen auseinanderlaufen. Der erste Magnetkreis 30 verläuft von der Polspitze 25 des Magneten 9 zum ungefähren Schwerpunkt des Zentralelements 11, bzw. magnetisierbaren Abschnitts 60 des Biegeelements 10, seitlich weiter über die Kante 28 des Zentralelements 11 und den Luftspalt zum freien Ende 21 des Statorkerns 7, sodann weiter durch den Statorkern 7 und die linke Hälfte des Rückflusselements 50 zurück in den Magneten 9. Der zweite Magnetkreis 31 verläuft von der Polspitze 25 des Magneten 9 zum ungefähren Schwerpunkt des Zentralelements 11 bzw. magnetisierbaren Abschnitts 60 des Biegeelements 10, seitlich weiter über die Kante 29 des Zentralelements 11 und den Luftspalt zum freien Ende 22 Statorkerns 8, sodann weiter durch den Statorkern 8 und die rechte Hälfte des Rückflusselements 50 zurück in den Magneten 9. Beide Magnetkreise 30, 31 vereinen sich folglich im Rückflusselement 50 unterhalb des Magneten 9, bzw. im Südpol des Magneten 9.

Anstelle eines Permanentmagneten kann der Magnet 9 auch als Elektromagnet ausgebildet sein. Dadurch wird in vorteilhafter Weise erreicht, dass der vom Magneten 9 erzeugte statische (DC) magnetische Fluss $\Phi_M$, der durch

den ersten und zweiten Magnetkreis 30, 31 läuft, und somit auch die Amplitude des Scan-Winkels beliebig verändert werden kann, ohne dass der Treiberstrom durch die Antriebsspulen 5, 6 verändert werden müsste.

Die vom Magneten 9 allein erzeugten Magnetkreise 30, 31 verlaufen gegensinnig und sind aufgrund der symmetrischen Anordnung des Magneten 9 relativ zu den Statorkernen 7, 8 und dem Zentralelement 11 des Biegeelements 10 symmetrisch ausgebildet. Diese werden unsymmetrisch, wenn an die Antriebsspulen 5, 6 ein elektrisches Wechselstrom-Treibersignal, z.B. ein Sinussignal oder Rechtecksignal, anlegt wird.

Da die Antriebsspulen 5, 6 im vorliegenden Ausführungsbeispiel mit gleicher Wicklungszahl, jedoch in entgegengesetzter Richtung auf die Statorkerne 7, 8 gewickelt sind, wird beim symmetrischen Anlegen eines elektrischen Wechselstrom-Treibersignals im ersten Statorkern 7 ein magnetischer Fluss $\Phi_1$ und im zweiten Statorkern 8 ein betragsmäßig gleich großer magnetischer Fluss $\Phi_2$ induziert, welcher jedoch in entgegengesetzter Richtung zum magnetischer Fluss $\Phi_1$ im ersten Statorkern 7 orientiert ist. Im vorliegenden Ausführungsbeispiel ist das Wechselstrom-Treibersignal so gewählt, dass zu einen bestimmten Zeitpunkt der in der Antriebsspule 6 generierte magnetische Fluss $\Phi_2$ - wie durch den Pfeil 34 in Fig. 4 gezeigt - einen Teil des vom Magneten 9 induzierten Flusses $\Phi_M$ im Magnetkreis 31 vermindert oder sogar eliminiert. Umgekehrt generiert die Antriebsspule 5 einen gleichen, aber entgegengesetzten elektromagnetischen Fluss $\Phi_1$, der - wie durch den Pfeil 36 in Fig. 4 gezeigt - den vom Magneten 9 induzierten Fluss $\Phi_M$ im Magnetkreis 30 verstärkt, sobald die Amplitude des Treibersignals ihr Maximum erreicht.

Wenn das Treibersignal seine maximale positive Amplitude erreicht hat, ist das in dem Statorkern 7 generierte magnetische Feld im freien Ende 21 konzentriert und fließt über den Luftspalt in die Kante 28 des Biegeelements 10. Dieses Feld verstärkt den existierenden statischen magnetischen Fluss $\Phi_M$ an der Kante 28, der durch den Magneten 9 generiert wird. Die Flussdichte wird somit verstärkt und erhöht die Anziehungskraft zwischen der Kante 28 und der dem freien Ende 21 des Statorkerns 7. Gleichzeitig erzeugt die Antriebsspule 6 im Statorkern 8 einen magnetischen Fluss $\Phi_2$ entgegengesetzter Polarität, der die Anziehungskraft zwischen dem freien Ende 22 des Statorkerns 8 und der Kante 29 des Biegeelements 10 verringert. Die dadurch erreichte Asymmetrie der magnetischen Kräfte zwischen dem Zentralelement 11 und den freien Enden 21, 22 der Statorkerne 7, 8 verursacht ein Drehmoment um die Längsachse A-A, infolgedessen das Zentralelement 11 in Richtung des Drehmoment-Vektors um die Längsachse A-A oszilliert.

Geht das Treibersignal von seiner positiven Maximalamplitude in die negative Maximalamplitude über, kehren sich die Richtungen der spuleninduzierten magnetischen Flüsse $\Phi_1$, $\Phi_2$ um. Dadurch wird ein entgegengesetztes Drehmoment auf das Zentralelement 11 ausgeübt, infolgedessen sich die Rotationsrichtung des Zentralelements 11 kehrt. Im Ergebnis wird durch eine periodische Umpolung der spuleninduzierten magnetischen Flüsse $\Phi_1$, $\Phi_2$ mittels eines periodischen Treibersignals das Biegeelement 10, insbesondere das Zentralelement 11, in eine erzwungene Drehschwingung versetzt, deren Frequenz direkt von der Frequenz des Treibersignals abhängt, die insbesondere gleich groß ist.

Statt an beide Antriebsspulen 5, 6 kann das Treibersignal auch nur an eine der beiden Antriebsspulen 5, 6 angelegt werden, so dass der magnetische Fluss durch den einen Kreis verstärkt wird, während der magnetische Fluss durch den anderen Kreis reduziert wird.

Gemäß der vorliegenden Erfindung wird das Drehmoment auf das Zentralelement 11 durch eine Kraft bewirkt, die sich proportional zu der an die Antriebsspulen 5, 6 angelegten elektrischen Leistung verhält. Wenn die Frequenz der elektrischen Schwingung mit der Eigenfrequenz des Biegeelements 10 übereinstimmt, können selbst bei relativ geringer Antriebsleistung durch Resonanzüberhöhung Schwingungen mit großer Winkelamplitude erzeugt werden.

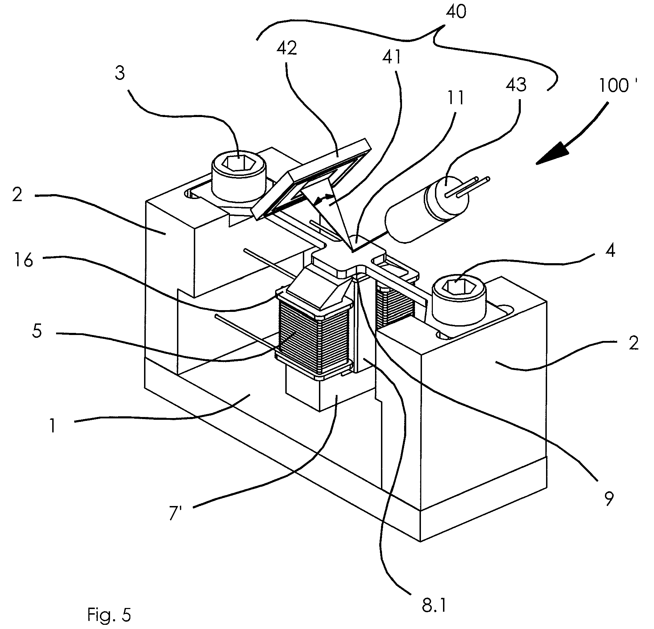

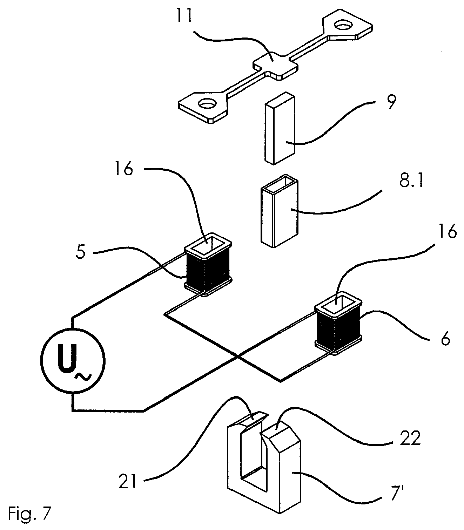

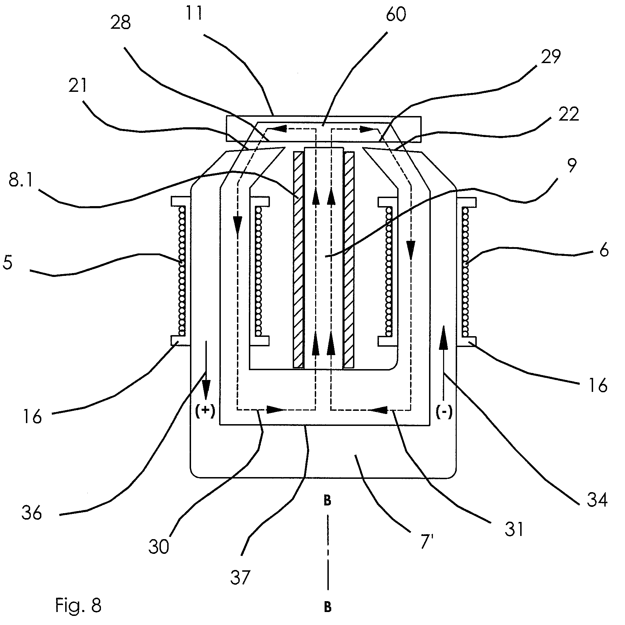

Die Figuren 5 bis 8 zeigen ein weiteres mögliches Ausführungsbeispiel eines optischen Torsionsresonanzschwingers 100' mit einem optischen Sensorsystem 40 gemäß der vorliegenden Erfindung.

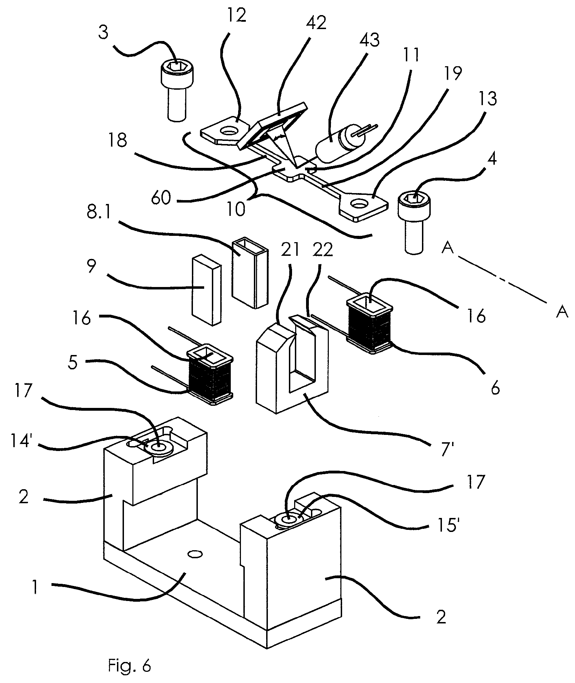

Bezugnehmend auf Fig. 5 und 6 umfasst der Torsionsresonanzschwinger 100' eine im Wesentlichen U-förmige Basisplatte 1, welche den mechanischen Träger für den Torsionsresonanzschwinger 100' bildet. Die beiden kurzen Flanken der U-förmigen Basisplatte 1 bilden zusammen mit zwei Fixierschrauben 3, 4 und zwei Endhalterungen 2 zur Aufnahme und Fixierung eines länglichen, federelastischen Biegeelementes 10. Zur Fixierung des Biegeelementes 10 bzw. Montage der Fixierschrauben 3, 4 auf den kurzen Flanken der U-förmigen Basisplatte 1, werden die Fixierschrauben 3, 4 in entsprechende Gewindelöcher 17 in den kurzen Flanken der Basisplatte 1 eingeschraubt.

Bezugnehmend auf Fig. 5 bis 8 weist der Torsionsresonanzschwinger 100' als wesentliches Bauteil das Biegeelement 10 auf, welches bezüglich seiner Längsachse A-A an beiden Enden in den Endhalterungen 2 fixiert ist. Das Biegeelement 10 weist ferner in seinem Schwerpunkt S bzw. Zentrum einen magnetisierbaren Abschnitt 60 auf, der als eigentliches oszillierendes Element des Torsionsresonanzschwingers 100' dient. Der magnetisierbare Abschnitt 60 ist als Anker 60 des Biegeelements 10 ausgebildet, von dem unter Bildung der Längsachse A-A diametral zwei Schwingungsarme 18, 19 als Torsionsfedern ausgehen, die je mit einer, im vorliegenden Ausführungsbeispiel trapezförmigen Endlasche 12, 13 zum Fixieren des Biegeelements in den Endhalterungen 2 verbunden sind. Das Biegeelement 10 mit Anker 60, Schwingungsarmen 18, 19 und Endlaschen 12, 13 ist, wie im vorliegenden Ausführungsbeispiel, vorzugsweise einstückig ausgebildet. Um eine Drehschwingung des Biegeelements um seine Längsachse A-A zu ermöglichen, sind die Schwingungsarme 18, 19 - wie im vorliegenden Ausführungsbeispiel - im Querschnitt vorzugsweise dünn und rechteckig ausgebildet.

Die Endlaschen 12, 13 des Biegeelements 10 sind - wie zuvor beschrieben - in den Endhalterungen 2 fixiert. Dazu weisen im vorliegenden Ausführungsbeispiel die Stirnflächen der beiden kurzen Flanken der U-förmigen Basisplatte 1 Auflager 14, 15 auf, in denen die Endlaschen 12, 13 aufgenommen und mit den Fixierschrauben 3, 4 festgeklemmt sind. Alternativ können die Endlaschen 12, 13 auch geschweißt werden. Es ist bevorzugt, dass die Befestigungsmittel so ausgebildet sind, dass keine der an der Drehschwingung beteiligten Bereiche des Biegeelements 10 behindert werden.

Des Weiteren ist der Anker 60 flächig, insbesondere scheibenförmig, ausgebildet und überragt die Schwingungsarme 18, 19 quer zur Längsrichtung A-A des Biegeelements 10, so dass sich in der Draufsicht eine allgemein rechteckige Form ergibt.

Der Anker 60 besitzt auf der den Arbeitsluftspalten abgewandten Seite ein oder mehrere lichtreflektierende, lichtemittierende oder lichtdetektierende Elemente 11, etwa eine polierte Oberfläche, einen aufgedampften Film aus Metall, einen mehrschichtigen Dünnfilm-Reflektor, ein Beugungsgitter oder einen Spiegel mit reflektierender Oberfläche. Im vorliegenden Ausführungsbeispiel ist die Oberfläche kreisförmig in den Ankers 60 eingearbeitet, poliert und dient als lichtreflektierendes Element 11.

Bezugnehmend auf Fig. 5 bis 8 ist unterhalb des Ankers 60 zum Biegeelement 10 beabstandet ein Magnet 9 angeordnet. Der Magnet 9 ist ein Permanentmagnet. Gemäß der Erfindung ist der Magnet 9 derart angeordnet, dass der vom ihm erzeugte magnetische Fluss $\Phi_M$ symmetrisch in den oder aus dem magnetisierbaren Abschnitt 60 des Biegeelements 10 senkrecht zu dessen Längsachse A-A gerichtet ist. Die Magnetisierungsrichtung des Magneten 9 verläuft in vertikaler Richtung entsprechend der Achse B - B. Der Luftspalt zwischen dem Biegeelement 10 und dem einen Pol des Magneten 9 ist derart klein, dass sich das Biegeelement 10 kollisionsfrei bewegen kann.

Der andere Pol des Magneten 9 sitzt mittig auf dem Joch des weichmagnetischen Kreises 7', auch Stator genannt. Um den Stator 7' ist die auf zwei symmetrische Hälften aufgeteilte elektrische Antriebsspule 5 und 6 gewickelt. Der Stator hat zwei Polflächen 21 und 22, die den Polflächen des Ankers 28 und 29 gegenüberstehen. Erfindungsgemäß sind die Polflächen des Ankers in einer Ebene angeordnet. Zudem liegen sie in einer Projektion entlang der Achse B-B übereinander. Demzufolge müssen die Polflächen des Stators 7' um den Betrag des maximalen Schwenkwinkels des Ankers 60 nach außen gekippt sein, damit sich bei der maximalen Auslenkung ein gleichmäßiger, paralleler minimaler Luftspalt zwischen den Polflächen 21 und 28 bzw. 22 und 29 ergibt.

Der durch einen Wechselstrom in der Antriebsspule 5 und 6 erzeugte magnetische Fluss $\Phi_{el}$ 37 fließt durch den Stator 7', die Luftspalte, die dessen Polflächen 21 und 22 mit den Ankerpolflächen 28 und 29 bilden und durch den Anker 60. Bei diesem geschlossenen Kreislauf addieren oder subtrahieren sich der elektrisch erregte Fluss 37 mit den beiden Kreisläufen der permanentmagnetisch erregten Flüsse 30 und 31, sodass es zu unterschiedlich großen Kräften an den Luftspaltgrenzflächen kommt. Die resultierende Kraft erzeugt dann im Drehpunkt des Ankers 60 ein Drehmoment, dessen Größe von der Größe der resultierenden Kraft und dessen Richtung von der Polarität des Stromflusses 34 und 36 direkt proportional abhängig sind.

Der Magnet 9 wird von einer Kurzschlusswindung 8.1 umschlossen. Diese Hülse vornehmlich aus Kupfer mit einer Wandstärke von mindestens 0,2 mm vorzugsweise jedoch 1 bis 2 mm, ist mit ihrer Innenkontur gut an die Querschnittsabmessung des Magneten 9 angepasst. Die Länge der Hülse beträgt maximal die des Magneten 9, sie kann aber auch kürzer sein und sollte sich dann stets im oberen Teil des Magneten nahe am Luftspalt befinden.

Vorzugsweise ist das Biegeelement 10 aus einem Federstahl hergestellt und bildet mit den Schwingungsarmen 18, 19 eine Torsionsfeder, deren Federkonstante von der Länge, Breite und Dicke und dem Material der Schwingungsarme 18, 19 bestimmt ist. Alternativ ist es möglich, dass das Biegeelement 10 aus einem Faserverbundmaterial besteht, in dem sich entweder ferromagnetisches Material befindet oder auf dem ein ferromagnetisches Material, beispielsweise durch Beschichten, kraftschlüssig aufgebracht ist. Faserverbundmaterial verfügt über eine kleinere Masse als Federstahl, sodass Biegeelemente hergestellt werden können, die mit geeigneter Federkonstante sehr hohe Torsionseigenfrequenzen (z.B. > 16 kHz) aufweisen.

Der Stator 7' besteht vorzugsweise einem lamellierten ferromagnetischen Material, beispielsweise aus mehreren dünnen, voneinander isolierten Blechen der Dicke von etwa 0,05mm bis etwa 0,50 mm aus FeSi, FeNi, FeCo oder un- bzw. niedrig legiertem Eisen.

Die übrigen Komponenten des Torsionsresonanzschwingers 100' können aus nicht-ferromagnetischem Material bestehen, sofern sie nicht zur Leitung und Unterstützung der magnetischen Flüsse $\Phi_1$, $\Phi_2$, $\Phi_M$ beitragen. Die Basisplatte 1 und die Endhalterungen 2 bzw. die Fixierschrauben 3, 4 können aus jedem Material gefertigt sein, welches eine stabile Fixierung des Biegeelements 10 sicherstellt.

Im vorliegenden Ausführungsbeispiel gemäß den Fig. 5 und 6 ist der Torsionsresonanzschwinger 100' mit einem optischen Sensorsystem 40 ausgestattet, das dazu ausgebildet ist, die gesamte Schwingungsbewegung des Ankers 60 zu erfassen. Dazu weist das Sensorsystem im vorliegenden Ausführungsbeispiel ein lichtemittierendes Element bzw. eine Lichtquelle 43 auf, die einem Lichtstrahl in Richtung der Reflexionsfläche 11 des Biegeelements 10 aussendet, der dort reflektiert wird und dann unter einem Aufspannwinkel 41 auf einen optischen Detektor 42 auftrifft, der dazu geeignet ist, die Modulation des Lichtstrahls proportional zum Drehwinkel des Ankers 60 zu detektieren. Das vorliegende optische Sensorsystem ist insbesondere in der Lage, die gesamte Schwingungsamplitude, die Frequenz sowie mögliche Verzerrungen der Schwingung, die etwa durch ein defektes Biegeelement 10 verursacht werden, zu erfassen.

Die Lichtquelle 43 kann eine kohärente oder nicht-kohärente Lichtquelle sein, etwa eine LED (Light Emitting Diode) oder Laserdiode. Als Detektor kommen beispielsweise ein sogenanntes "Position Sensitive Device" (PSD), ein sogenanntes "Charge Coupled Device" (CCD), eine Anordnung von diskreten Photodioden oder dergleichen in Betracht.

Bevorzugt liegt der Reflexionspunkt im Flächenschwerpunkt des Ankers 60, so dass die gesamte Schwingungsamplitude effektiv erfasst werden kann. Im hier gezeigten Ausführungsbeispiel ist es aus Platzgründen nicht möglich, das Sensorsystem 40 unterhalb des Ankers 60 anzuordnen, wobei eine Anbringung des Sensorsystems 40 unterhalb der Schwingungsarme 18, 19 ohnehin nicht ausreichen würde, die gesamte Schwingungsamplitude des Ankers 60 zu erfassen. Daher ist das optische Sensorsystem 40 im vorliegenden Ausführungsbeispiel oberhalb des Ankers 60 angeordnet.

Des Weiteren kann eine hier nicht dargestellte Steuereinrichtung vorgesehen sein, die mit dem optischen Sensorsystem 40 und/oder der Antriebsspule 5, 6 wirkverbunden ist und die die Schwingungsamplitude und/oder die Schwingungsfrequenz steuert und/oder regelt. Durch diese Regelung ist es auch möglich den Aussteuerungsbereich gezielt zu verändern (Zoomwirkung), ohne dass eine aufwändige Optik vorgesehen sein muss.

Bezugszeichenliste

| | |
|---|---|
| 1 | Basisplatte |
| 2 | Endhalterung |
| 3,4 | Fixierschrauben |
| 3a, 4a | Fixierplatte |
| 5 | erste Antriebsspule |
| 6 | zweite Antriebsspule |
| 7 | erster Statorkern |
| 7' | Stator |
| 8 | zweiter Statorkern |
| 8.1 | Kurzschlusswindung |
| 9 | Magnet |
| 10 | Biegeelement |
| 11 | Zentralelement |
| 12, 13 | Endlasche |
| 14, 15 | Aussparungen |
| 14', 15' | Auflager |
| 16 | Schraube |
| 17 | Gewindeloch |
| 18, 19 | Schwingungsarme |
| 20 | Polschuh |
| 21, 22 | freie Enden des Polschuhs |
| 23 | erste Hälfte des Polschuhs |
| 24 | zweite Hälfte des Polschuhs |
| 25 | Polspitze |
| 26, 27 | äußerer Rand des Biegeelements |
| 28, 29 | äußerer Rand des Zentralelements |
| 30 | erster magnetischer Kreis |
| 31 | zweiter magnetischer Kreis |
| 34, 36 | Pfeil |
| 40 | optisches Sensorsystem |
| 41 | Aufspannwinkel des Sensorsystems |
| 42 | Detektor |
| 43 | Lichtquelle |
| 50 | Rückflusselement |
| 60 | magnetisierbarer Teilbereich des Biegeelements/Anker |
| 100 | Scan-Vorrichtung |
| 100' | Torsionsresonanzschwinger |
| A-A | Längsrichtung des Biegeelements |

B-B        Symmetrieachse des Polschuhs

**Patentansprüche**

1.  Optische Scan-Vorrichtung (100, 100'), insbesondere optischer Resonanzscanner, mit einem federelastischen Biegeelement (10), welches über wenigstens einen stationären Magneten (9) und über wenigstens eine stationäre Antriebsspule (5) zu Schwingungen, insbesondere zu Drehschwingungen um eine Längsachse (A-A), anregbar ist, wobei die Antriebsspule (5) um einen Polschuh (20) gewickelt ist, welcher magnetisch mit dem Magneten (9) koppelt ist und zwei sich gegenüberliegende freie Enden (21, 22) aufweist, zwischen denen das Biegeelement (10) symmetrisch derart angeordnet ist, dass zwischen dem Biegeelement (10) und den freien Enden (21, 22) des Polschuhs (20) ein magnetischer Fluss im Wesentlichen senkrecht zur Längsachse (A-A) übertragbar ist, wobei der Magnet (9) symmetrisch bezüglich der freien Enden (21, 22) des Polschuhs (20) derart angeordnet ist, dass der vom Magneten (9) erzeugte magnetische Fluss im Wesentlichen senkrecht zur Längsachse (A-A) mit dem Biegeelement (10) koppelt und sich in Überlagerung der magnet- und spuleninduzierten magnetischen Flüsse durch den Magneten (9) und eine erste Hälfte (23) des Polschuhs (20) ein erster magnetischer Kreis (30) und durch den Magneten (9) und eine zweite Hälfte (24) des Polschuhs (20) ein zweiter magnetischer Kreis (31) ausbilden, die zueinander gegensinnig in einer Ebene senkrecht zur Längsachse (A-A) durch einen magnetisierbaren Abschnitt (60) des Biegeelements (10) verlaufen, **dadurch gekennzeichnet, dass** eine Kurzschlusswindung (8.1) vorgesehen ist, die den Magneten (9) umgibt.

2.  Scan-Vorrichtung (100, 100') nach Anspruch 1, **dadurch gekennzeichnet, dass** zusätzlich zur ersten Antriebsspule (5) eine zweite Antriebsspule (6) vorgesehen ist, wobei die erste Antriebsspule (5) um die erste Hälfte (23) des Polschuhs (20) und die zweite Antriebsspule (6) um die zweite Hälfte (24) des Polschuhs (20) gewickelt ist.

3.  Scan-Vorrichtung (100) nach einem der vorhergehenden Ansprüche, **dadurch gekennzeichnet, dass** der Polschuh (20) aus einem ersten Statorkern (7) und einem davon separaten zweiten Statorkern (8) besteht, welche die erste und die zweite Hälfte (23, 24) des Polschuhs (20) bilden und vorzugsweise im Wesentlichen C-förmig ausgebildet sind.

4.  Scan-Vorrichtung (100, 100') nach einem der vorhergehenden Ansprüche, **dadurch gekennzeichnet, dass** der Magnet (9) und der Polschuh (20) bzw. der Magnet (9) und die beiden Hälften (23, 24) des Polschuhs (20) über ein Rückflusselement (50) magnetisch miteinander gekoppelt sind.

5.  Scan-Vorrichtung (100, 100') nach einem der vorhergehenden Ansprüche, **dadurch gekennzeichnet, dass** das Biegeelement (10) bezüglich seiner Längsachse (A-A) an beiden Enden in je einer Endhalterung (2) fixiert ist, welche vorzugsweise aus einem unmagnetischen Material bestehen.

6.  Scan-Vorrichtung (100, 100') nach einem der vorhergehenden Ansprüche, **dadurch gekennzeichnet, dass** eine Basisplatte (1) aus einem vorzugsweise unmagnetischen Material vorgesehen ist, auf der die Endhalterungen (2), das Rückflusselement (50), der Polschuh (20), der erste Statorkern (7; 7'), der zweite Statorkern (8) und/oder der Magnet (9) festgelegt sind.

7.  Scan-Vorrichtung (100, 100') nach einem der vorhergehenden Ansprüche, **dadurch gekennzeichnet, dass** zur Erzeugung von im Wesentlichen symmetrischen Schwingungen das Biegeelement (10) bezüglich seines magnetisierbaren Abschnitts (60) im Wesentlichen symmetrisch ausgebildet ist und/oder dass der Schwerpunkt des Biegeelements (10) symmetrisch im Bereich des magnetisierbaren Abschnitts (60) des Biegeelements (10) liegt.

8.  Scan-Vorrichtung (100, 100') nach einem der vorhergehenden Ansprüche, **dadurch gekennzeichnet, dass** der magnetisierbare Abschnitt (60) ein Zentralelement (10) des Biegeelements bildet, von dem zwei, vorzugsweise im Querschnitt rechteckige, Verbindungsarme (18, 19) diametral ausgehen, die je mit einer, insbesondere trapezförmigen, Endlasche (12, 13) zum Fixieren des Biegeelements in den Endhalterungen (2) verbunden sind.

9.  Scan-Vorrichtung (100, 100') nach Anspruch 8, **dadurch gekennzeichnet, dass** das Zentralelement (11) im Wesentlichen flächig, insbesondere scheibenförmig, ausgebildet ist und/oder die Verbindungsarme (18, 19) in Richtung der Statorkerne (7, 8) quer zur Längsrichtung (A-A) des Biegeelements (10) überragt.

10. Scan-Vorrichtung (100, 100') nach Anspruch 8 oder 9, **dadurch gekennzeichnet, dass** das Biegeelement (10) zumindest teilweise aus einem ferromagnetischen Material oder aus einem Faserverbundmaterial oder einer Kombination dieser Materialien besteht.

11. Scan-Vorrichtung (100, 100') nach einem der Ansprüche 8 bis 10, **dadurch gekennzeichnet, dass** das Biegeelement (10) im Abschnitt (60) bzw. auf dem Zentralelement (11), insbesondere auf der dem Magneten (9) abgewandten Seite, wenigstens ein lichtreflektierendes und/oder lichtemittierendes und/oder lichtdetektierendes Element, beispielsweise eine polierte Oberfläche, einen Spiegel oder ein Beugungsgitter, aufweist.

12. Scan-Vorrichtung (100, 100') nach einem der Ansprüche 8 bis 11, **dadurch gekennzeichnet, dass** zwischen dem magnetisierbaren Abschnitt (22) bzw. Zentralelement (11) und dem Magnet (9) sowie den freien Enden (21, 22) des Polschuhs (20) ein Luftspalt im Bereich von 0,2mm bis 1,5mm vorgesehen ist derart, dass das Zentralelement (11) zwischen dem Magnet (9) und den freien Enden der Statoren (21, 22) kollisionsfrei oszillieren kann und von den magnet- und spuleninduzierten magnetischen Flüssen maximal durchdrungen ist.

13. Scan-Vorrichtung (100, 100') nach einem der vorhergehenden Ansprüche, **dadurch gekennzeichnet, dass** zur Erfassung der gesamten Schwingungsamplitude und/oder der Schwingungsfrequenz des oszillierenden Biegeelementes (10), vorzugsweise auf der dem Magneten (9) abgewandten Seite des Biegeelements (10), ein optisches Sensorsystem (40) mit einer Lichtquelle (43), beispielsweise einer LED oder einer Laserdiode, und einen intensitäts- und/oder positionssensitiven Detektor (42), beispielsweise einem Charge Coupled Device, vorgesehen ist.

14. Scan-Vorrichtung (100, 100') nach einem der vorhergehenden Ansprüche, **dadurch gekennzeichnet, dass** eine Steuereinrichtung vorgesehen ist, welche mit dem optischen Sensorsystem (40) und/oder der ersten und/oder zweiten Antriebsspule (5; 6) wirkverbunden ist und mittels welcher die gesamte Schwingungsamplitude und/oder die Schwingungsfrequenz des oszillierenden Biegeelementes (10) steuer- und/oder regelbar ist.

15. Scan-Vorrichtung (100') nach einem der vorangegangenen Ansprüche, **dadurch gekennzeichnet, dass** freie Enden der Polschuhe (21, 22) zu dem magnetisierbaren Abschnitt (60) derart ausgerichtet sind, dass bei maximaler Auslenkung des magnetisierbaren Abschnitts (60) ein paralleler minimaler Luftspalt ergibt, wobei eine dem magnetisierbaren Abschnitt (60) zugewandte Stirnseite des Magneten (9) im Ruhezustand parallel zu dem magnetisierbaren Abschnitt (60) ausgerichtet ist, wobei die freie Enden der Polschuhe (21, 22) und eine dem magnetisierbaren Abschnitt (60) zugewandte Stirnseite des Magneten (9) und der magnetisierbare Abschnitt (60) in einer Projektion entlang der Symmetrieachse des Polschuhs (B-B) übereinander liegend angeordnet sind.

**Claims**

1. Optical scanning device (100, 100'), more particularly optical resonance scanner, comprising a resilient bending element (10), which is inducible to vibrate, more particularly to rotationally vibrate about a longitudinal axis (A-A) by means of at least one stationary magnet (9) and by means of at least one stationary drive coil (5), wherein the drive coil (5) is wound around a pole shoe (20) which is magnetically coupled to the magnet (9) and has two opposing free ends (21, 22), between which the bending element (10) is symmetrically arranged in such a way that a magnetic flux is transmittable between the bending element (10) and the free ends (21, 22) of the pole shoe (20) in a manner substantially perpendicular to the longitudinal axis (A-A), wherein the magnet (9) is arranged symmetrically with respect to the free ends (21, 22) of the pole shoe (20) in such a way that the magnetic flux generated by the magnet (9) couples with the bending element (10) in a manner substantially perpendicular to the longitudinal axis (A-A) and a first magnetic circuit (30) is formed by the magnet (9) and a first half (23) of the pole shoe (20) and a second magnetic circuit (31) is formed by the magnet (9) and a second half (24) of the pole shoe (20), both by way of the superposition of the magnet-induced and coil-induced magnetic fluxes, said magnetic circuits extending counter to one another through a magnetisable portion (60) of the bending element (10) in a plane perpendicular to the longitudinal axis (A-A), **characterized in that** provision is made of a short circuit winding (8.1) which surrounds the magnet (9).

2. Scanning device (100, 100') according to Claim 1, **characterized in that** provision is made of a second drive coil (6) in addition to the first drive coil (5), wherein the first drive coil (5) is wound around the first half (23) of the pole shoe (20) and the second drive coil (6) is wound around the second half (24) of the pole shoe (20).

3. Scanning device (100) according to one of the preceding claims, **characterized in that** the pole shoe (20) consists of a first stator core (7) and a second stator core (8) separate therefrom, which form the first and the second half (23, 24) of the pole shoe (20) and preferably have a substantially C-shaped embodiment.

4. Scanning device (100, 100') according to one of the preceding claims, **characterized in that** the magnet (9) and the pole shoe (20) or the magnet (9) and the two halves (23, 24) of the pole shoe (20) are magnetically coupled to one another by way of a return flow element (50).

5. Scanning device (100, 100') according to one of the preceding claims, **characterized in that** the bending element (10) is respectively fixed in an end holder (2) at both ends in respect of the longitudinal axis (A-A) thereof, which end holders preferably consist of a nonmagnetic material.

6. Scanning device (100, 100') according to one of the preceding claims, **characterized in that** provision is made of a base plate (1) made of a preferably nonmagnetic material, with the end holders (2), the return flow element (50), the pole shoe (20), the first stator core (7; 7'), the second stator core (8) and/or the magnet (9) being affixed thereon.

7. Scanning device (100, 100') according to one of the preceding claims, **characterized in that** the bending element (10) has a substantially symmetric embodiment in respect of the magnetisable portion (60) thereof for the purposes of generating substantially symmetric vibrations and/or **in that** the centre of gravity of the bending element (10) lies symmetrically in the region of the magnetisable portion (60) of the bending element (10).

8. Scanning device (100, 100') according to one of the preceding claims, **characterized in that** the magnetisable portion (60) forms a central element (10) of the bending element from which two connection arms (18, 19) extend diametrically, which connection arms preferably have a rectangular cross-section and are each connected with an in particular trapezoidal end tab (12, 13) for the purposes of affixing the bending element in the end holders (2).

9. Scanning device (100, 100') according to Claim 8, **characterized in that** the central element (11) has a substantially planar, in particular disc-shaped embodiment and/or projects beyond the connection arms (18, 19) in the direction of the stator cores (7, 8) across the longitudinal direction (A-A) of the bending element (10).

10. Scanning device (100, 100') according to Claim 8 or 9, **characterized in that** the bending element (10) consists at least in part of a ferromagnetic material or a fibre composite material or a combination of these materials.

11. Scanning device (100, 100') according to one of Claims 8 to 10, **characterized in that** the bending element (10) has at least one light-reflecting and/or light-emitting and/or light-detecting element, for example a polished surface, a mirror or a diffraction grating, in the portion (60) or on the central element (11), in particular on the side facing away from the magnet (9).

12. Scanning device (100, 100') according to one of Claims 8 to 11, **characterized in that** an air gap in the range of 0.2 mm to 1.5 mm is provided between the magnetisable portion (22) or the central element (11) and the magnet (9) as well as the free ends (21, 22) of the pole shoe (20) in such a way that the central element (11) can oscillate without collision between the magnet (9) and the free ends of the stators (21, 22) and that said central element is penetrated to the maximum extent by the magnet-induced and coil-induced magnetic fluxes.

13. Scanning device (100, 100') according to one of the preceding claims, **characterized in that** an optical sensor system (40) with a light source (43), for example an LED or a laser diode, and an intensity-sensitive and/or position-sensitive detector (42), for example a charge-coupled device, is provided, preferably on the side of the bending element (10) facing away from the magnet (9), for registering the whole vibration amplitude and/or the vibration frequency of the oscillating bending element (10).

14. Scanning device (100, 100') according to one of the preceding claims, **characterized in that** provision is made of a control apparatus which is functionally connected to the optical sensor system (40) and/or the first and/or second drive coil (5; 6) and by means of which the whole vibration amplitude and/or the vibration frequency of the oscillating bending element (10) is controllable and/or regulable.

15. Scanning device (100') according to one of the preceding claims, **characterized in that** free ends of the pole shoes (21, 22) are aligned in such a way in relation to the magnetisable portion (60) that a parallel minimum air gap emerges in the case of maximum deflection of the magnetisable portion (60), wherein an end face of the magnet (9) facing the magnetisable portion (60) is aligned parallel to the magnetisable portion (60) in the rest state, wherein the free ends of the pole shoes (21, 22) and an end face of the magnet (9) facing the magnetisable portion (60) and the magnetisable portion (60) are arranged one above the other in a projection along the axis of symmetry of the pole shoe (B-B).

**Revendications**

1. Dispositif de balayage optique (100, 100'), notamment scanner à résonance optique, comportant un élément de flexion élastique (10) qui peut être mis en oscillation, notamment en oscillation de rotation, autour d'un axe longitudinal (A-A) par l'intermédiaire d'au moins un aimant stationnaire (9) et par l'intermédiaire d'au moins une bobine d'entraînement stationnaire (5), dans lequel la bobine d'entraînement (5) est enroulée autour d'une pièce polaire (20) qui est couplée magnétiquement à l'aimant (9) et comporte deux extrémités libres opposées (21, 22) entre lesquelles est disposé de manière symétrique l'élément de flexion (10) afin qu'un flux magnétique puisse être transmis de manière sensiblement perpendiculaire à l'axe longitudinal (A-A) entre l'élément de flexion (10) et les extrémités libres (21, 22) de la pièce polaire (20), dans lequel l'aimant (9) est disposé de manière symétrique par rapport aux extrémités libres (21, 22) de la pièce polaire (20) afin que le flux magnétique généré par l'aimant (9) soit couplé à l'élément de flexion (10) de manière sensiblement perpendiculaire à l'axe longitudinal (A-A) et qu'il se forme, avec superposition des flux magnétiques induits par l'aimant et les bobines, un premier circuit magnétique (30) à travers l'aimant (9) et une première moitié (23) de la pièce polaire (20) et un second circuit magnétique (31) à travers l'aimant (9) et une seconde moitié (24) de la pièce polaire (20), lesquels circuits magnétiques s'étendent en sens opposé l'un à l'autre dans un plan perpendiculaire à l'axe longitudinal (A-A) passant par une section magnétisable (60) de l'élément de flexion (10), **caractérisé en ce qu'**il est prévu une spire en court-circuit (8.1) qui entoure l'aimant (9).

2. Dispositif de balayage (100, 100') selon la revendication 1, **caractérisé en ce qu'**il est prévu, outre la première bobine d'entraînement (5), une seconde bobine d'entraînement (6), dans lequel la première bobine d'entraînement (5) est enroulée autour de la première moitié (23) de la pièce polaire (20) et la seconde bobine d'entraînement (6) est enroulée autour de la seconde moitié (24) de la pièce polaire (20).

3. Dispositif de balayage (100) selon l'une quelconque des revendications précédentes, **caractérisé en ce que** la pièce polaire (20) est constituée d'un premier noyau de stator (7) et d'un second noyau de stator (8) séparé de celui-ci, lesquels noyaux forment les première et seconde moitiés (23, 24) de la pièce polaire (20) et sont de préférence réalisés de manière à présenter sensiblement la forme d'un C.

4. Dispositif de balayage (100, 100') selon l'une quelconque des revendications précédentes, **caractérisé en ce que** l'aimant (9) et la pièce polaire (20) ou l'aimant (9) et les deux moitiés (23, 24) de la pièce polaire (20) sont magnétiquement couplés les uns aux autres par un élément de flux de retour (50).

5. Dispositif de balayage (100, 100') selon l'une quelconque des revendications précédentes, **caractérisé en ce que** l'élément de flexion (10) est fixé par rapport à son axe longitudinal (A-A) par ses deux extrémités dans un support d'extrémité (2) respectif qui est de préférence constitué d'un matériau non magnétique.

6. Dispositif de balayage (100, 100') selon l'une quelconque des revendications précédentes, **caractérisé en ce qu'**il est prévu une plaque de base (1) constituée d'un matériau de préférence non magnétique, sur laquelle sont fixés les supports d'extrémité (2), l'élément de flux de retour (50), la pièce polaire (20), le premier noyau de stator (7 ; 7'), le second noyau de stator (8) et/ou l'aimant (9).

7. Dispositif de balayage (100, 100') selon l'une quelconque des revendications précédentes, **caractérisé en ce que**, pour générer des oscillations sensiblement symétriques, l'élément de flexion (10) est réalisé de manière sensiblement symétrique par rapport à sa section magnétisable (60) et/ou **en ce que** le centre de gravité de l'élément de flexion (10) est disposé symétriquement dans la région de la section magnétisable (60) de l'élément de flexion (10).

8. Dispositif de balayage (100, 100') selon l'une quelconque des revendications précédentes, **caractérisé en ce que** la section magnétisable (60) forme un élément central (10) de l'élément de flexion duquel partent deux bras de liaison (18, 19) présentant de préférence une section transversale rectangulaire, qui sont respectivement reliés à un rebord d'extrémité (12, 13) de préférence trapézoïdal destiné à fixer l'élément de flexion dans les supports d'extrémité (2).

9. Dispositif de balayage (100, 100') selon la revendication 8, **caractérisé en ce que** l'élément central (11) est réalisé de manière sensiblement plane, notamment sous la forme d'un disque, et/ou **en ce qu'**il fait saillie par rapport aux bras de liaison (18, 19) dans la direction des noyaux de stator (7, 8) transversalement à l'axe longitudinal (A-A) de l'élément de flexion (10).

10. Dispositif de balayage (100, 100') selon la revendication 8 ou 9, **caractérisé en ce que** l'élément de flexion (10) est au moins partiellement constitué d'un matériau ferromagnétique ou d'un matériau composite à fibres ou d'une combinaison de ces matériaux.

11. Dispositif de balayage (100, 100') selon l'une quelconque des revendications 8 à 10, **caractérisé en ce que** l'élément de flexion (10) comporte dans la section (60), sur l'élément central (11), notamment sur la face opposée à l'aimant (9), au moins un élément réfléchissant la lumière et/ou émettant de la lumière et/ou détectant la lumière, par exemple une surface polie, un miroir ou un réseau de diffraction.

12. Dispositif de balayage (100, 100') selon l'une quelconque des revendications 8 à 11, **caractérisé en ce que**, entre la section magnétisable (22) ou l'élément central (11) et l'aimant (9) et les extrémités libres (21, 22), de la pièce polaire (20), il est prévu un entrefer d'une taille se situant dans la gamme de 0,2 mm à 1,5 mm, de manière à ce que l'élément central (11), entre l'aimant (9) et les extrémités libres des stators (21, 22), puisse osciller sans collision et qu'il soit traversé de manière maximale par les flux magnétiques induits par l'aimant et les bobines.

13. Dispositif de balayage (100, 100') selon l'une quelconque des revendications précédentes, **caractérisé en ce que**, pour couvrir la totalité de l'amplitude d'oscillation et/ou la fréquence d'oscillation de l'élément de flexion oscillant (10), il est de préférence prévu sur la face opposée à l'aimant (9) de l'élément de flexion (10), un système de capteur optique (40) comportant une source de lumière (43), par exemple une LED ou une diode laser, et un détecteur sensible à l'intensité et/ou à la position (42), par exemple un dispositif à couplage de charge.

14. Dispositif de balayage (100, 100') selon l'une quelconque des revendications précédentes, **caractérisé en ce qu'**il est prévu un dispositif de commande qui est fonctionnellement connecté au système de capteur optique (40) et/ou à la première et/ou à la seconde bobine d'entraînement (5 ; 6) et au moyen duquel la totalité de l'amplitude d'oscillation et/ou la fréquence d'oscillation de l'élément de flexion oscillant (10) peuvent être commandées et/ou régulées.

15. Dispositif de balayage (100, 100') selon l'une quelconque des revendications précédentes, **caractérisé en ce que** des extrémités libres des pièces polaires (21, 22) sont orientées vers la section magnétisable (60) de manière à ce que, lors d'une déviation maximale de la section magnétisable (60), un entrefer minimal parallèle soit obtenu, dans lequel, à l'état de repos, une face avant de l'aimant (9) opposée à la section magnétisable (60) est orientée parallèlement à la section magnétisable (60), dans lequel les extrémités libres des pièces polaires (21, 22) et une face avant opposée à la section magnétisable (60) de l'aimant (9) et la section magnétisable (60) sont disposées de manière opposées les unes aux autres dans une projection orientée le long de l'axe de symétrie de la pièce polaire (B-B).

EP 2 893 387 B1

Fig. 1

19

Fig. 2

Fig. 3

Fig. 4

Fig. 5

EP 2 893 387 B1

Fig. 6

24

EP 2 893 387 B1

Fig. 7

Fig. 8

EP 2 893 387 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5557444 A
- DE 69529530 T2
- US 20060017333 A1